(19) Europäisches Patentamt / European Patent Office / Office européen des brevets

(11) **EP 3 984 135 B1**

(12) **FASCICULE DE BREVET EUROPEEN**

(45) Date de publication et mention de la délivrance du brevet:
**15.11.2023 Bulletin 2023/46**

(21) Numéro de dépôt: **20750707.0**

(22) Date de dépôt: **10.07.2020**

(51) Classification Internationale des Brevets (IPC):
**H04B 1/7163** (2011.01)     **H04B 1/717** (2011.01)

(52) Classification Coopérative des Brevets (CPC):
**H04B 1/7163; H04B 1/71635; H04B 1/717; Y02D 30/70**

(86) Numéro de dépôt international:
**PCT/FR2020/051248**

(87) Numéro de publication internationale:
**WO 2021/009452 (21.01.2021 Gazette 2021/03)**

(54) **ÉMETTEUR UWB COMPACT À TRÈS BASSE CONSOMMATION ET FORME D'ONDE RECONFIGURABLE**

KOMPAKTER UWB-EMITTER MIT SEHR GERINGEM VERBRAUCH UND REKONFIGURIERBARER WELLENFORM

VERY-LOW-CONSUMPTION RECONFIGURABLE-WAVEFORM COMPACT UWB EMITTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.07.2019 FR 1907944**

(43) Date de publication de la demande:
**20.04.2022 Bulletin 2022/16**

(73) Titulaire: **Commissariat à l'Energie Atomique et aux Energies Alternatives
75015 Paris (FR)**

(72) Inventeurs:
  • **MASSON, Gilles
    38054 GRENOBLE Cedex 9 (FR)**
  • **HAMEAU, Frédéric
    38054 GRENOBLE Cedex 9 (FR)**
  • **OUVRY, Laurent
    38054 GRENOBLE Cedex 9 (FR)**

(74) Mandataire: **Brevalex
    56, Boulevard de l'Embouchure
    B.P. 27519
    31075 Toulouse Cedex 2 (FR)**

(56) Documents cités:
  • **CHUL KIM ET AL: "Design of a Tunable All-Digital UWB Pulse Generator CMOS Chip for Wireless Endoscope", IEEE TRANSACTIONS ON BIOMEDICAL CIRCUITS AND SYSTEMS, IEEE, US, vol. 4, no. 2, 2 février 2010 (2010-02-02), pages 118-124, XP011301203, ISSN: 1932-4545**
  • **CHUL KIM ET AL: "A 15pJ/pulse all-digital UWB pulse generator with pulse tuning capability", CIRCUITS AND SYSTEMS, 2008. MWSCAS 2008. 51ST MIDWEST SYMPOSIUM ON, IEEE, PISCATAWAY, NJ, USA, 10 août 2008 (2008-08-10), pages 578-581, XP031315296, ISBN: 978-1-4244-2166-4**

EP 3 984 135 B1

**Description**

**DOMAINE TECHNIQUE**

La présente invention concerne le domaine de la génération d'impulsions ultra-large bande ou UWB (*Ultra-Wide Band*), en particulier celui des émetteurs UWB utilisant des antennes RF de basse impédance. Elle trouve notamment application dans le domaine de la localisation des objets connectés, dans celui des radars UWB ainsi que dans les systèmes de communication conformes au standard IEEE 802.15.4 - 2011.

**ÉTAT DE LA TECHNIQUE ANTÉRIEURE**

Les signaux UWB sont utilisés dans un grand nombre d'applications, que ce soit pour des besoins de localisation ou de communication. Les spectres de ces signaux doivent être conformes à des masques spectraux édictés par la FCC aux Etats-Unis et l'ETSI en Europe, de manière à ne pas interférer avec des bandes spectrales déjà utilisées. La norme IEEE 802.15.4 - 2011, relative aux réseaux de type LR WPAN (*Low Rate Wireless Personal Area Network*) utilisant des signaux UWB, prévoit plusieurs canaux de communication de largeur 600 MHz et 1300 MHz dans la bande 3.1- 10.6 GHz avec des masques spectraux associés. Un signal UWB est composé d'impulsions UWB. Dans la suite, on désignera par impulsion UWB une séquence de cycles RF ayant une fonction d'enveloppe telle qu'elle est conforme aux masques spectraux précédemment cités.

Les émetteurs UWB doivent adopter une architecture reconfigurable de manière à pouvoir s'adapter aux différentes applications envisagées, en particulier à différents canaux, différentes largeurs de bande, différents types de modulation de données, différents niveaux d'émissions, différents masques spectraux.

Par ailleurs, les émetteurs UWB sont souvent destinés à équiper des objets connectés, ne disposant par construction que d'une faible autonomie en énergie (batterie de faible taille). La très large diffusion de ces objets plaide également en faveur d'une réduction de leur consommation en énergie, de manière à en limiter l'empreinte environnementale.

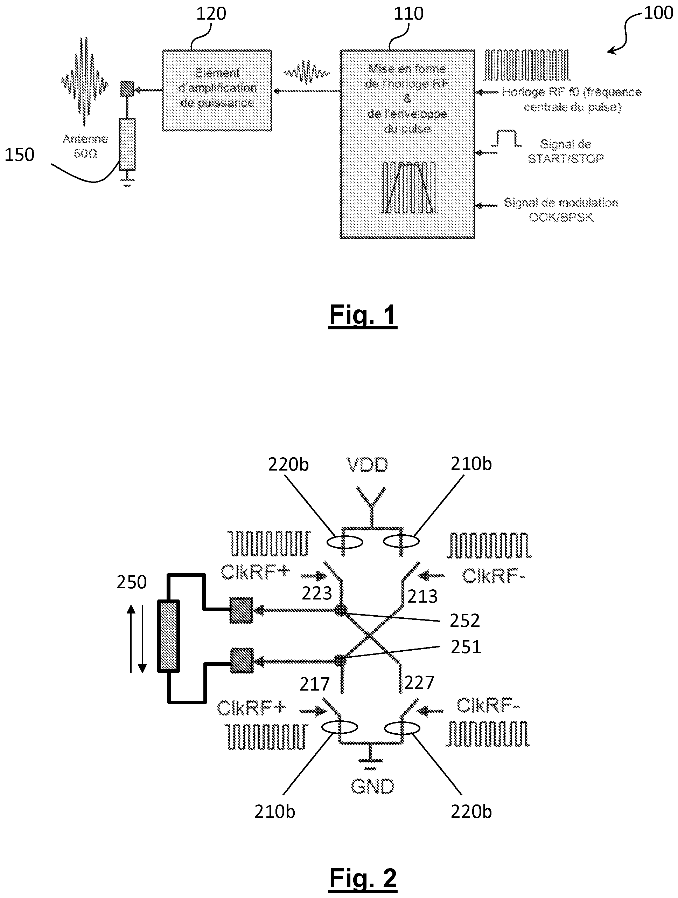

Les différents types d'émetteur UWB connus de l'état de la technique obéissent à une architecture générale, 100, telle que représentée en Fig. 1.

Selon cette architecture générale, un émetteur UWB comprend un module de mise en forme de l'enveloppe de l'impulsion et de l'horloge RF, désigné par 110. Ce module est destiné à générer un signal RF à la fréquence centrale du signal UWB, $f_0$ , à partir d'un signal d'horloge de même fréquence, à mettre en forme l'impulsion de manière à ce que celle-ci présente l'enveloppe souhaitée. En outre, lorsqu'une modulation doit être effectuée, généralement une modulation par tout ou rien, OOK (*On Off Keying*), ou bien une modulation de polarité, BPSK (*Binary Phase-Shift Keying*), le module 110 peut appliquer cette modulation pour obtenir des impulsions UWB modulées.

L'impulsion UWB en sortie du module 110 est ensuite amplifiée par le module d'amplification de puissance 120 avant d'être émis par l'antenne 150. L'étage d'amplification de puissance est nécessaire en raison de la basse impédance de l'antenne.

On peut distinguer deux grandes familles d'émetteurs UWB : ceux utilisant des éléments de mémoire et des lignes à retard pour générer les impulsions de manière numérique et ceux utilisant des ponts « H » pour les générer de manière analogique.

Un exemple d'émetteur appartenant à la première famille est décrit dans le brevet US-B-8179945 au nom de la présente Demanderesse. Les impulsions à générer sont représentées sous la forme de séquences d'échantillons numériques stockés dans une mémoire et lus séquentiellement à la fréquence centrale, $f_0$. L'amplification est ensuite réalisée par la mise en parallèle thermométrique de buffers numériques permettant d'ajuster le gain.

Un tel émetteur est toutefois consommateur d'énergie dans la mesure où les impulsions sont mises en forme à la fréquence centrale, alternance par alternance.

En outre, même si la génération numérique est elle-même reproductible, les capacités parasites présentes dans l'étage de combinaison et l'étage d'amplification déforment la forme d'onde, de sorte que le spectre du signal UWB émis est relativement peu prédictible. En outre, les buffers numériques produisent des appels de courant importants, ce qui conduit à des variations parasites du potentiel d'alimentation et de la masse et rend encore plus délicat le contrôle du spectre du signal émis.

La seconde famille précitée d'émetteurs UWB utilise une architecture à pont « H » telle que représentée en Fig. 2.

Ce pont comprend deux branches parallèles, 210b et 220b, ayant chacune un point milieu, respectivement en 251 et 252. L'antenne UWB, 250, est montée entre les deux points milieu en question (d'où la forme en H du pont). La première branche, 210b, comprend un premier commutateur 213 entre la borne d'alimentation VDD et le point milieu 251 ainsi qu'un second commutateur 217 entre le point milieu 251 et la masse. De manière similaire, la seconde branche, 220b, comprend un premier commutateur 223 entre la borne d'alimentation et le point milieu 252 ainsi qu'un second commutateur 227 entre le point milieu 252 et la masse. Les commutateurs sont réalisés en technologie CMOS. Le premier commutateur, 213, de la première branche, ainsi que le second commutateur de la seconde branche 227 sont contrôlés par un premier signal d'horloge ClkRF-. Le premier commutateur, 223, de la seconde branche, ainsi que le second commutateur, 217, de la première branche sont contrôlés par un second signal d'horloge, ClkRF+ de polarité inverse à celle du premier signal d'horloge. Ainsi, lorsque le premier signal d'horloge est à un niveau haut, le courant circule dans le premier commutateur, 213, de la première branche, dans l'antenne 250, selon un premier sens, puis dans le second commutateur, 227, de la seconde branche. Réciproquement, lorsque le premier signal d'horloge est à un niveau bas, le courant circule dans le premier commutateur 223 de la seconde branche, dans l'antenne 250, selon un second sens, opposé au premier sens, puis dans le second commutateur, 217, de la première branche.

Le principal avantage de cette architecture à pont « H » est que le rendement en courant est optimal dans la mesure où l'adaptation d'impédance est réalisée par des commutateurs CMOS à très haute impédance d'entrée. D'autre part, l'excursion de tension aux bornes de la charge (l'antenne 250) est optimale et proche de 2xVDD étant donné que la chute de potentiel à travers les commutateurs CMOS à l'état passant est très faible (résistance de quelques Ohms).

Un exemple d'émetteur UWB adoptant une architecture à pont « H » est décrit dans la demande de brevet US-A-2012/0027050, notamment dans la Fig. 4 de ce document. Dans cet exemple, une impulsion UWB est synthétisée alternance par alternance à la fréquence centrale à l'aide d'une logique rapide et les alternances en question sont ensuite amplifiées (grâce à une pluralité de tensions de référence) et combinées dans un pont en « H » comportant autant de branches en parallèle que d'alternances dans l'impulsion UWB à générer.

D'autres exemples d'émetteur UWB adoptant une architecture à pont en « H » sont décrits dans l'article de C. Kim et al. intitulé « Design of a tunable all-digital UWB pulse generator CMOS chip for wireless endoscope » publié dans IEEE Trans. on Biomédical Circuits and Systems, vol. 4, no. 2, février 2010, pages 118-124 ainsi que dans l'article du même auteur intitulé « A 15 pJ/pulse all-digital UWB pulse generator with pulse tuning capability » publié dans Proceedings of 51st MidWest Symposium on Circuits And Systems, MWSCAS 2008, 10 août 2008, pages 578-581.

Cette architecture conduit encore à une consommation d'énergie élevée dans la mesure où la synthèse de l'impulsion UWB est là aussi réalisée alternance par alternance à la fréquence centrale. Elle est aussi complexe puisqu'elle nécessite autant de tensions de référence (à faible impédance de sortie) que de niveaux d'amplitude pour les différentes alternances composant l'impulsion

En outre, le contrôle du spectre du signal UWB est difficilement prédictible car les capacités parasites présentes dans les étages de combinaison logique et dans l'étage de combinaison constitué par le pont « H » déforment par filtrage l'impulsion UWB.

Enfin, le nombre de tensions de référence disponibles limite la reconfigurabilité du générateur.

Le but de la présente invention est par conséquent de proposer une architecture d'émetteur UWB à très faible consommation, qui soit reconfigurable et permette de contrôler précisément le spectre des impulsions UWB émises.

## EXPOSÉ DE L'INVENTION

La présente invention est définie par un émetteur d'impulsions UWB tel que donné par la revendication 1. Des modes avantageux de réalisation sont précisés dans les revendications dépendantes.

## BRÈVE DESCRIPTION DES DESSINS

D'autres caractéristiques et avantages de l'invention apparaîtront à la lecture d'un mode de réalisation préférentiel de l'invention, décrit en référence aux figures jointes parmi lesquelles :

La Fig. 1 représente de manière schématique l'architecture générale d'un émetteur UWB connu de l'état de la technique ;
La Fig. 2 représente de manière schématique un pont « H » utilisé dans un émetteur UWB connu de l'état de la technique ;
La Fig. 3 représente de manière schématique l'architecture générale d'un émetteur UWB, selon un premier mode de réalisation de l'invention ;
La Fig. 4A représente de manière schématique un émetteur UWB selon l'architecture générale de la Fig. 3, détaillant un exemple d'implémentation des premier et second modules de contrôle de forme d'enveloppe ;
La Fig. 4B représente un chronogramme des signaux intervenant dans l'émetteur UWB de la Fig. 4A;
La Fig. 4C représente de manière schématique un circuit de génération de signaux d'horloge et de signaux de contrôle d'enveloppe pour l'émetteur de la Fig. 4A dans le cas d'émission de trains d'impulsions rapprochées ;
La Fig. 5 représente de manière schématique un émetteur UWB selon l'architecture de la Fig. 3, adapté à effectuer une modulation QPSK ou 8-PSK ;
La Fig. 6 représente de manière schématique un émetteur UWB selon l'architecture de la Fig. 3, équipé d'un étage de contrôle d'amplitude selon une première variante d'implémentation ;

La Fig. 7 représente de manière schématique un émetteur UWB selon l'architecture de la Fig. 3, équipé d'un étage de contrôle d'amplitude selon une seconde variante d'implémentation ;

La Fig. 8 représente de manière schématique l'architecture générale d'un émetteur UWB, selon un deuxième mode de réalisation de l'invention ;

La Fig. 9 représente de manière schématique l'architecture générale d'un émetteur UWB selon un troisième mode de réalisation de l'invention ;

La Fig. 10A illustre un exemple de train d'impulsions généré par l'émetteur UWB de la Fig. 9 ;

La Fig. 10B illustre une impulsion élémentaire du train d'impulsions de la Fig. 10A ;

La Fig. 10C illustre l'occupation spectrale du train d'impulsions de la Fig. 10A ainsi que celle de l'impulsion élémentaire de la Fig 10B.

## EXPOSÉ DÉTAILLÉ DE MODES DE RÉALISATION PARTICULIERS

L'idée générale à la base de l'invention est de proposer un émetteur UWB basé à nouveau sur une structure de pont en « H » mais intégrant au sein des branches du pont, d'une part, un contrôle en bande de base de la forme de l'enveloppe des impulsions UWB, et d'autre part un contrôle de l'amplitude de ces impulsions, distinct du contrôle de la forme de l'enveloppe.

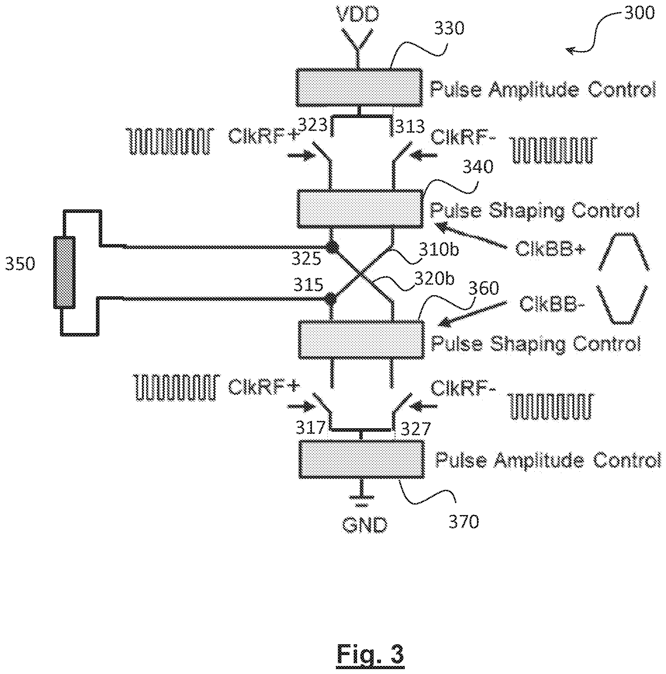

La Fig. 3 représente de manière schématique l'architecture générale d'un émetteur UWB, selon un premier mode de réalisation de l'invention.

L'émetteur UWB est basé sur un pont en « H », 300, comprenant deux branches en parallèle. Comme dans le pont de la Fig. 2, on retrouve dans la première branche, un premier commutateur 313, un point milieu 315 et un second commutateur 317. De la même façon, on retrouve dans la seconde branche un premier commutateur 323, un second point milieu 325 et un second commutateur 327. Le premier commutateur, 313, de la première branche, ainsi que le second commutateur de la seconde branche 327 sont contrôlés par un premier signal d'horloge ClkRF-. Le premier commutateur, 323, de la seconde branche, ainsi que le second commutateur, 317, de la première branche sont contrôlés par un second signal d'horloge, ClkRF+ de polarité inverse à celle du premier signal d'horloge. Les premier et second signaux d'horloge ont une fréquence égale à la fréquence centrale (fréquence RF) des impulsions UWB à générer.

L'antenne UWB en montée entre le premier point milieu 315 et le second point milieu 325. Elle est alimentée de manière différentielle (differential fed antenna).

A la différence de la Fig. 2, l'émetteur UWB comprend un premier module de contrôle d'amplitude, 330, destiné à contrôler l'amplitude de la partie positive de l'enveloppe de l'impulsion UWB, ce module étant situé entre la borne d'alimentation et une première extrémité commune des première et seconde branches. Le premier module de contrôle d'amplitude permet de régler la tension (dite tension haute) appliquée à la première extrémité commune.

De manière symétrique, il comprend un second module de contrôle d'amplitude, 370, destiné à contrôler l'amplitude de la partie négative de l'impulsion UWB, ce module étant situé entre une seconde extrémité commune des première et seconde branches, et la masse. Le second module de contrôle d'amplitude permet de régler la tension (dite tension basse) appliquée à la seconde extrémité commune.

L'émetteur UWB comprend en outre un premier module de contrôle d'enveloppe, 340, destiné à contrôler, au moyen d'un premier signal de contrôle de forme, ClkBB+ , la forme de l'enveloppe de la partie positive de l'impulsion UWB, ce module étant situé entre les premiers commutateurs 313,323 et les points milieu correspondants 315,325. De manière symétrique, il comprend un second module de contrôle d'enveloppe, 360, destiné à contrôler au moyen d'un second signal de contrôle de forme, ClkBB-, la forme de l'enveloppe de la partie négative de l'impulsion UWB, ce module étant situé entre les points milieu 315,325 et les seconds commutateurs des première et seconde branches 317,327. Il est important de noter que les signaux de contrôle de forme ClkBB+ et ClkBB- sont des signaux basse fréquence (en bande de base) car ils correspondent à la modulation d'amplitude des impulsions UWB. En d'autres termes, le spectre de ces signaux de contrôle de forme est situé dans une bande spectrale bien inférieure à la fréquence centrale, $f_0$ des impulsions UWB. Le contrôle de la forme de l'enveloppe de l'impulsion à basse fréquence en lieu et place de la synthèse de chacune des alternances à la fréquence RF, $f_0$, permet de réduire significativement la consommation de l'émetteur.

L'architecture d'émetteur UWB illustrée en Fig. 3 présente plusieurs caractéristiques avantageuses.

Tout d'abord le contrôle d'amplitude est réalisé de manière statique en contrôlant simplement la tension haute (au moyen du module 330) et la tension basse (au moyen du module 370) aux extrémités des branches. On évite ainsi de stocker en numérique des formes d'onde de plusieurs niveaux de gain ou de générer en analogique un grand nombre de tensions de référence.

Ensuite, la forme de l'enveloppe d'une impulsion UWB émise par l'émetteur est contrôlée de manière différentielle par les premier et second modules de contrôle d'enveloppe 340 et 360. Le contrôle de la mise en forme des impulsions UWB est indépendant du contrôle de leur amplitude. Ces deux contrôles opèrent en série directement dans l'étage d'amplification de puissance, sans besoin particulier d'adaptation d'impédance ni de circuiterie supplémentaire, ce qui contribue également à la réduction de la consommation globale de l'émetteur.

En outre, le contrôle du spectre des impulsions est simple et précis. Les signaux de contrôle de forme d'enveloppe peuvent être générés en basse fréquence avec des composants simples. Ils sont appliqués directement à l'étage d'amplification de puissance sans nécessité d'introduire un étage de transformation d'impédance. La présence d'un étage de mise en forme d'enveloppe entre les commutateurs et la charge (en l'occurrence l'antenne UWB) permet d'isoler cette dernière contre les transitoires de commutation à la fréquence RF. Cette propriété contribue à la pureté spectrale des impulsions UWB générées et donc au respect de leur conformité au masque spectral.

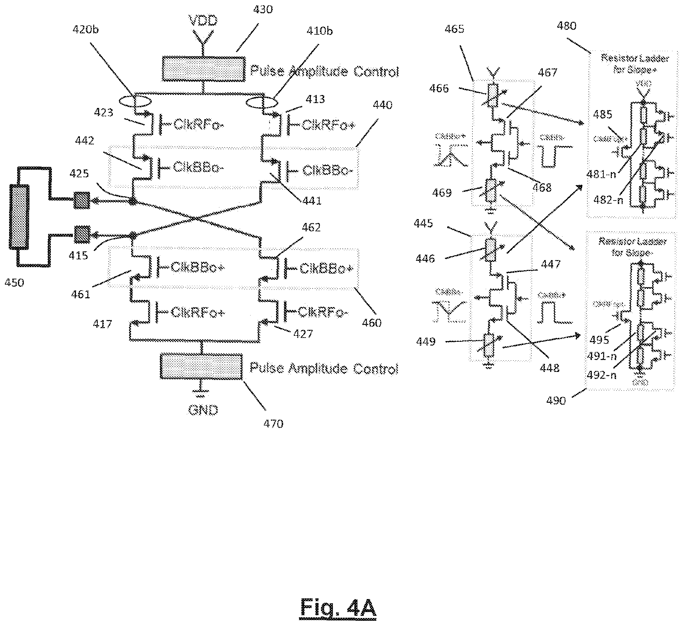

La Fig. 4A représente de manière schématique un émetteur UWB conforme à l'architecture générale de la Fig. 3 et détaillant un exemple d'implémentation des premier et second modules de contrôle de forme d'enveloppe.

On a représenté sur la figure les premier et second commutateurs, 413, 417 de la première branche 410, ainsi que les premier et second commutateurs, 423,427 de la seconde branche 420. Les premiers commutateurs 413 et 423 sont des transistors PMOS et les seconds commutateurs 417 et 427 sont des transistors NMOS, de sorte que l'étage d'amplification de puissance est réalisé par un premier inverseur CMOS (413 et 417) et un second inverseur CMOS (423 et 427) dont les sorties respectives sont reliées aux bornes de la charge.

L'étage de contrôle d'amplitude, est constitué des modules de contrôle d'amplitude 430,470, en série avec l'étage de contrôle d'enveloppe, constitué des modules de contrôle d'enveloppe 440 et 460.

La structure des modules de contrôle d'amplitude sera détaillée plus loin.

Les premier et second modules de contrôle d'enveloppe 440 et 460 sont réalisés à l'aide de transistors MOSFET. Plus précisément, le premier module de forme d'enveloppe 440 comprend un premier transistor PMOS, 441, situé dans la première branche 410 et un second transistor PMOS, 442, situé dans la seconde branche, 420. La source et le drain du premier transistor PMOS, 441, sont respectivement connectés au drain du transistor PMOS, 413, et au premier point milieu, 415, relié à une première borne de la charge 450. De même, la source et le drain du second transistor PMOS, 442, sont respectivement connectés au drain du transistor PMOS, 423, et au second point milieu, 425, relié à une seconde borne de la charge 450. Les premier et second transistors, 441,442, du premier module de contrôle d'enveloppe 440 sont commandés par un premier signal de contrôle d'enveloppe ClkBBo-. Ce signal est généré par un premier module de génération de signal de contrôle d'enveloppe, 445 (représenté à droite de la figure) à partir d'un premier signal de commande, ClkBBi+.

De manière symétrique, le second module de contrôle d'enveloppe 460 comprend un premier transistor NMOS, 461, situé dans la première branche 410 et un second transistor NMOS, 462, situé dans la seconde branche, 420. La source et le drain du premier transistor NMOS, 461, sont respectivement connectés au drain du transistor NMOS, 417, et au premier point milieu, 415. De même, la source et le drain du second transistor NMOS, 462, sont respectivement connectés au drain du transistor NMOS, 427, et au second point milieu, 425.

Les premier et second transistors, 461,462, du second module de contrôle d'enveloppe 460 sont commandés par un second signal de contrôle d'enveloppe ClkBBo+. Ce signal est généré par un second module de génération de signal de contrôle d'enveloppe, 465 (représenté à droite de la figure) à partir d'un second signal de commande, ClkBBi-.

Les premier et second modules de génération de signal de contrôle d'enveloppe ont la même structure.

Plus précisément, si l'on considère le premier module de génération de signal de contrôle d'enveloppe, 445, le premier signal de commande, ClkBBi+, commande les grilles d'un couple de transistors PMOS, 447, et NMOS, 448, montés en série entre l'alimentation et la masse. La source du transistor PMOS, 447 est connectée à l'alimentation via une première résistance variable 446 et la source du transistor NMOS, 448, est connectée à la masse via une seconde résistance variable 449. Les drains des transistors 447 et 448 sont reliés entre eux. Ainsi, lorsque le premier signal de commande, ClkBBi+, comprend une impulsion de tension haute, le transistor PMOS 447 est bloqué et le transistor NMOS 448 est passant. Il en résulte que la capacité grille-source du transistor 441 et la capacité grille-source du transistor 442 se déchargent à travers la seconde résistance variable 449. Le signal ClkBBo- en sortie du premier module de génération de signal de contrôle d'enveloppe décroît linéairement en amplitude. Le taux de décroissance de l'amplitude est donné par les capacités grille-source en parallèle précitées et la valeur de la seconde résistance variable 449. A la fin du créneau, le transistor PMOS, 447, devient passant et le transistor NMOS 448 devient bloqué, les capacités grille-source des transistors 441 et 442 se chargent alors à travers la résistance variable 446 et l'amplitude du signal croit linéairement. Le taux de croissance de l'amplitude est donné par les capacités grille-source précitées et la valeur de la première résistance variable, 446.

Si l'on considère maintenant le second module de génération de signal de contrôle d'enveloppe, 465, le second signal de commande, ClkBBi-, commande les grilles d'un couple de transistors PMOS, 467, et NMOS, 468, montés en série entre l'alimentation et la masse. La source du transistor PMOS, 467, est connectée à l'alimentation via une première résistance variable 466 et la source du transistor NMOS, 468, est connectée à la masse via une seconde résistance variable 469. Les drains des transistors 467 et 468 sont reliés entre eux. Ainsi, lorsque le second signal de commande, ClkBBi-, comprend une impulsion de tension basse, le transistor PMOS 467 est passant et le transistor NMOS 468 est bloqué. Il en résulte que la capacité grille-source du transistor 461 et la capacité grille-source du transistor 462 se chargent à travers la première résistance variable 466. Le signal ClkBBo+ en sortie du second module de génération de signal de contrôle d'enveloppe croit linéairement en amplitude. Le taux de croissance en amplitude est donné par les capacités grille-source précitées et la valeur de la première résistance variable 466. A la fin du créneau, le transistor PMOS 467 devient bloqué et le transistor NMOS 468 devient passant, les capacités grille-source des transistors 461 et 462 se déchargent alors à travers la résistance variable 469 et l'amplitude du signal ClkBBo+ décroit linéairement. Le taux de décroissance en amplitude est donné par les capacités grille-source précitées et la valeur de la seconde résistance variable 469.

Les premières résistances variables 446 et 466 des modules 445 et 465 ont avantageusement une structure identique illustrée en 480.

Une telle première résistance variable est composée d'un ensemble de résistances élémentaires 481-1,...,481-N montées en série entre la tension d'alimentation et la source du transistor PMOS (447 ou 467 selon le cas). Chaque résistance élémentaire 481-n peut être court-circuitée par un transistor correspondant 482-2 (ici un transistor PMOS) monté en parallèle sur cette résistance élémentaire. La première résistance est par conséquent déterminée par la somme des résistances élémentaires qui ne sont pas court-circuitées (c'est-à-dire dont les commandes de grille sont à l'état haut). Les résistances élémentaires peuvent être choisies identiques, auquel cas le code de commande est thermométrique, ou bien suivre une progression géométrique de raison 2, auquel cas le code de commande est binaire.

Chacune des première résistances variables 446, 466 peut être court-circuitée au moyen d'un transistor (ici un transistor PMOS), représenté en 485. Le transistor 485 du premier module de génération de signal de contrôle d'enveloppe, 445 est commandé par le second signal de validation, ClkRF opt-, et celui du second module de génération de signal de contrôle d'enveloppe, 465, est commandé par le premier signal de validation, ClkRF opt+. Ce transistor a pour fonction d'initier et de terminer la mise en forme de l'impulsion UWB. Les signaux de validation ClkRF opt+, ClkRF opt-, peuvent donc être considérés comme donnant chacun le début et la fin des impulsions UWB.

De manière similaire, les secondes résistances variables 449 et 469 des modules 445 et 465 ont avantageusement aussi une structure identique, illustrée en 490. Une telle seconde résistance variable est composée d'un ensemble de résistances élémentaires 491-1,...,491-N montées en série entre la source du transistor NMOS (449 ou 469 selon le cas) et la masse. Chaque résistance élémentaire 491-n peut être court-circuitée par un transistor (ici un transistor NMOS) associé, 492-n. La seconde résistance est par conséquent déterminée par la somme des résistances élémentaires qui ne sont pas court-circuitées (c'est-à-dire dont les commandes de grille sont à l'état bas). Là encore, les résistances élémentaires peuvent être choisies identiques, auquel cas le code de commande est thermométrique, ou bien suivre une progression géométrique de raison 2, auquel cas le code de commande est binaire.

Chacune des secondes résistances variables 449, 469 peut être court-circuitée au moyen d'un transistor (ici un transistor NMOS), représenté en 495. Le transistor 495 du premier module de génération de signal de contrôle d'enveloppe, 445, est commandé par le second signal de validation, ClkRF opt- et celui du second module de génération de signal de contrôle d'enveloppe, 465, est commandé par le premier signal de validation, ClkRF opt+. Ce transistor a donc pour fonction d'initier et de terminer la mise en forme de l'impulsion UWB.

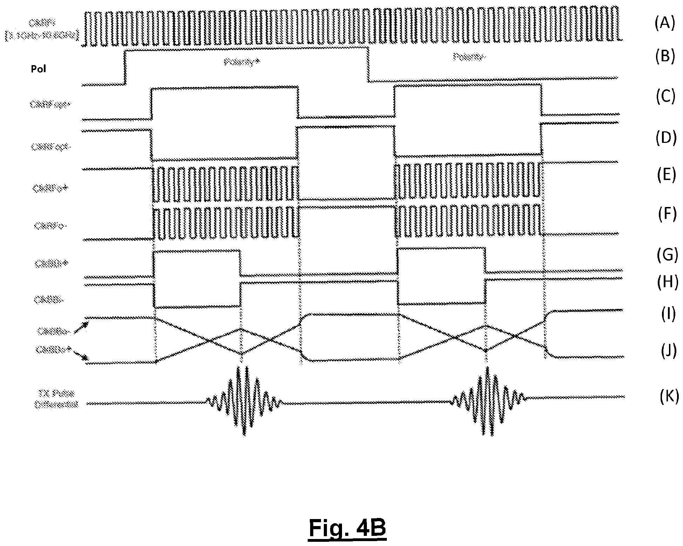

La Fig. 4B représente un chronogramme des signaux intervenant dans la génération d'une impulsion UWB par l'émetteur de la Fig. 4A.

La ligne (A) donne l'horloge de base, ClkRF, à la fréquence RF, $f_0$, qui sera de fait la fréquence centrale des impulsion générées.

La ligne (B) représente un signal de polarité, Pol, dans le cas où une modulation BPSK est appliquée au signal émis. En cas de changement de polarité, la phase des signaux de commutation ClkRFo- et ClkRFo+, représentés en (E) et (F) est inversée. Etant donné que les signaux de commutation ClkRFo- et ClkRFo+ sont inverses l'un de l'autre, le changement de polarité peut s'obtenir simplement en intervertissant ces signaux.

Il convient de noter que des modulations de phase d'ordres plus élevés (QPSK, 8-PSK, etc.) sont également réalisables comme expliqué plus loin.

Les premier et second signaux de validation ClkRFopt- et ClkRFopt+, inverses l'un de l'autre, sont représentés aux lignes (C) et (D). Ces signaux délimitent temporellement chaque impulsion et plus précisément l'intervalle pendant lequel une impulsion UWB est mise en forme.

On remarque que les signaux de commutation ClkRFo- et ClkRFo+ ne comprennent des alternances de l'horloge de base que pendant les intervalles de validation définis par les signaux ClkRFopt- et ClkRFopt+. Ainsi, la consommation du pont en « H » est encore réduite puisque limitée aux intervalles pendant lesquels intervient l'amplification de puissance. Les alternances positives d'une impulsion UWB sont générées lorsque les transistors 423 et 442, 461 et 417 sont passants (auquel cas la différence de potentiel de entre les bornes 425 et 415 est positive) et les alternances négatives d'une impulsion UWB sont générées lorsque les transistors 413 et 441, 462 et 427 sont passants. L'amplitude des alternances est déterminée de manière différentielle par les signaux de contrôle d'enveloppe ClkBBo- et ClkBBo+.

Les premier et second signaux de commande, ClkBBi+ et ClkBBi-, représentés en (G) et (H) sont inverses l'un de l'autre. Ces signaux délimitent temporellement les rampes de croissance et de décroissance de l'enveloppe des impulsions.

Le premier signal de contrôle d'enveloppe ClkBBo- indiqué en (I) présente une rampe décroissante lorsque le premier signal de commande, ClkBBi+, est à l'état haut (et donc le second signal de commande, ClkBBi-, est à l'état bas). Inversement il présente une rampe croissante lorsque le premier signal de commande, ClkBBi+, est à l'état bas.

De manière similaire, le second signal de contrôle d'enveloppe ClkBBo+ indiqué en (J) présente une rampe croissante lorsque le second signal de commande, ClkBBi-, est à l'état bas (et donc le premier signal de commande, ClkBBi+, est à l'état haut). Inversement il présente une rampe décroissante lorsque le second signal de commande, ClkBBi-, est à l'état haut.

Comme décrit plus haut, les rampes croissante et décroissante des signaux de contrôle d'enveloppe ClkBBo- et ClkBBo+ sont obtenues au moyen d'une charge et d'une décharge dans des circuits RC où R est une résistance variable (446, 466 pour la charge et 449, 469 pour la décharge) et C est une capacité fixe correspondant à la somme des capacités grille source (441 en parallèle avec 442 pour ClkBBo- et 461 en parallèle avec 462 pour ClkBBo+). Ainsi, les signaux de contrôle d'enveloppe présentent une forme triangulaire, ce qui permet d'approximer de manière satisfaisante une forme d'enveloppe gaussienne.

Les signaux de validation, ClkRFopt- et ClkRFopt+, mettent à l'état haut le premier signal de contrôle d'enveloppe, ClkBBo-, et à l'état bas le second signal de contrôle d'enveloppe, ClkBBo+. Ainsi, aucune rampe croissante ou décroissante de modulation de l'enveloppe des impulsions n'est donc générée en dehors des intervalles temporels définis par les signaux de validation, ClkRFopt- et ClkRFopt+, ce qui réduit la consommation de l'émetteur au strict minimum.

Enfin, on a représenté en (K) la tension aux bornes de la charge (antenne). Les impulsions n'apparaissent que pendant les intervalles de validation définis par ClkRFopt-et ClkRFopt+. La forme de leur enveloppe n'est modulée que pendant ces intervalles. Ces impulsions ont en outre la phase donnée par le signal de modulation BPSK, Pol.

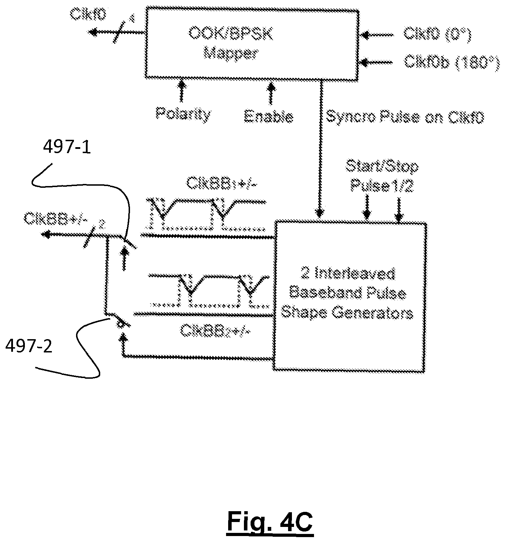

La Fig. 4C représente de manière schématique un circuit de génération de signaux d'horloge et de signaux de contrôle d'enveloppe pour l'émetteur de la Fig. 4A dans le cas d'émission de trains d'impulsions rapprochées

Le premier signal de commande, ClkBBi+ est ici décomposé en deux (et de manière plus générale en une pluralité) signaux de commande entrelacés ClkBB1i+ et ClkBB2i+. Autrement dit, chacun de ces signaux de commande possède une fréquence de répétition d'impulsion, moitié de celle ClkBBi+ et à une impulsion (positive) sur ClkBBi+ succède une impulsion (positive) sur ClkBB2i+. Les signaux ClkBB1i+ et ClkBB2i+ attaquent chacun un premier module de génération de signal de contrôle d'enveloppe, tel que représenté par 445 en Fig. 4A. Les signaux de sortie correspondants sont notés ClkBB1o-et ClkBB2o- sont eux-mêmes entrelacés. Ils sont combinés au moyen de commutateurs tels que 497-1 et 497-2 laissant passer alternativement une impulsion de ClkBB1o- et une impulsion de ClkBB2o- pour fournir le premier signal de contrôle d'enveloppe ClkBBo-.

De même, le second signal de commande, ClkBBi-, est décomposé en deux signaux de commande entrelacés ClkBB1i- et ClkBB2i-. Autrement dit, chacun de ces signaux de commande possède une fréquence de répétition d'impulsion, moitié de celle ClkBBi- et à une impulsion (négative) sur ClkBB1i- succède une impulsion (négative) sur ClkBB2i-. Les signaux ClkBB1i- et ClkBB2i- attaquent chacun un second module de génération de signal de contrôle d'enveloppe, tel que représenté par 465 en Fig. 4A. Les signaux de sortie correspondants sont notés ClkBB1o+ et ClkBB2o+ sont eux-mêmes entrelacés. Ils sont combinés au moyen de commutateurs tels que 497-1 et 497-2 laissant passer alternativement une impulsion de ClkBB1o+ et une impulsion de ClkBB2o+ pour fournir le second signal de contrôle d'enveloppe ClkBBo+.

On peut ainsi avantageusement générer des trains d'impulsion UWB, par exemple pour émettre 8 impulsions séparées de 4ns et de polarités alternées comme prévu dans la norme IEEE 802.15.4z.

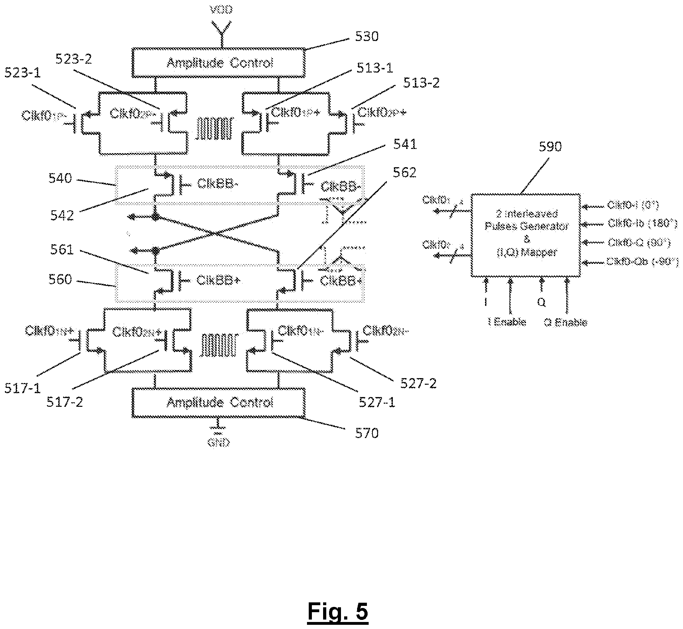

La Fig. 5 représente de manière schématique un émetteur UWB selon l'architecture de la Fig. 3, et mettant en oeuvre une modulation QPSK ou 8-PSK.

On a représenté sur la figure l'étage de mise en forme d'enveloppe, composé des modules de contrôle d'enveloppe 540 et 560, identiques aux modules 440 et 460 déjà décrits et l'étage de contrôle d'amplitude composés des modules 530 et 570 identiques aux modules 430 et 470, et dont la structure sera décrite plus loin.

A la différence de l'émetteur UWB de la Fig. 4A, l'étage d'amplification de puissance comprend, dans la première branche, 510, deux commutateurs en parallèle 513-1 et 513-2, situés entre la première extrémité commune et le premier module de contrôle d'enveloppe 540, ainsi que deux commutateurs en parallèle, 517-1 et 517-2, situés entre le second module de contrôle d'enveloppe 560 et la seconde extrémité commune.

Plus précisément, les commutateurs 513-1 et 513-2 sont des transistors PMOS dont les sources sont reliées à la première extrémité commune, dont la tension haute est réglée par le premier module de contrôle d'amplitude, et les drains sont reliés à la source du transistor PMOS 541. Les grilles des transistors 513-1 et 513-2 sont respectivement commandées par les signaux Clkf01P+ et Clkf02P+. De même, les commutateurs 517-1 et 517-2 sont des transistors NMOS dont les sources sont reliées à la seconde extrémité commune, dont la tension basse est réglée par le second module de contrôle d'amplitude et les drains sont reliés à la source du transistor NMOS 561. Les grilles des transistors 517-1 et 517-2 sont respectivement commandées par les signaux Clkf01N+ et Clkf02N+.

De manière similaire, les commutateurs 523-1 et 523-2 sont des transistors PMOS dont les sources sont reliées à la première extrémité commune et les drains sont reliés à la source du transistor PMOS 542. Les grilles des transistors 523-1 et 523-2 sont respectivement commandées par les signaux Clkf01P- et Clkf02P-. Enfin, les commutateurs 527-1 et 527-2 sont des transistors NMOS dont les sources sont reliées à la seconde extrémité commune et les drains sont reliés à la source du transistor NMOS 562. Les grilles des transistors 527-1 et 527-2 sont respectivement commandées par les signaux Clkf01N- et Clkf02N-.

Les signaux Clkf01P+ et Clkf02P+, Clkf01N+ et Clkf02N+, Clkf01P- et Clkf02P-, Clkf01N- et Clkf02N- sont générés à partir d'un système de génération de signaux de commutation 590 représenté sur la partie droite de la figure. Ce système 590 reçoit en entrée les horloges Clkf0-I, Clkf0-Q, Clkf0-Ib et Clkf0-Qb à la fréquence RF, $f_0$ (fréquence centrale des impulsions UWB), respectivement en phase (0°), en quadrature de phase (90°), en opposition de phase (180°) et en opposition de quadrature de phase (-90°). Il reçoit également les composantes (I,Q) des symboles à transmettre. Selon les valeurs de I et Q, le système de génération de signaux de commutation multiplexe les horloges d'entrée sur les signaux de commutation précités. La table de multiplexage est donnée dans le tableau I pour différents types de modulation. Pour raison de simplification de notation, les horloges Clkf0-I, Clkf0-Q, Clkf0-Ib et Clkf0-Qb ont été désignées par les suffixes, I,Q,Ib,Qb dans le tableau.

La modulation QPSK peut être implémentée selon deux versions possibles. Dans une première version (dénommée option 1 dans le tableau I), pour un symbole QPSK à transmettre deux impulsions UWB sont générées simultanément sur les 2 voies en quadrature, chaque impulsion étant modulée par la composante du symbole QPSK en question. Dans la seconde version (dénommée option 2a dans le tableau I), les impulsions UWB portant les 2 composantes du symbole sont générées en alternance sur les 2 voies. Une variante dans laquelle la seconde voie est neutralisée (colonnes 6-9) est également représentée (option 2b dans le tableau I). Bien entendu, la première voie peut être neutralisée en lieu et place de la seconde.

La modulation 8-PSK peut être implémentée en combinant les options 1 et 2a précitées comme indiqué dans le tableau I. Si besoin, les symboles (-1,-1), (-1,1), (1,1), (1,-1) peuvent être normalisés par un facteur $\sqrt{2}$ en jouant sur le contrôle d'amplitude.

Tableau I

| 1 | 2 | 3 | 4 | 5 | 6 | 7 | 8 | 9 | 10 |
|---|---|---|---|---|---|---|---|---|---|
| Modulation | Clkf01N+ | Clkf01N- | Clkf01P+ | Clkf01P- | Clkf02N+ | Clkf02N- | ClkfO2P+ | Clkf02P- | Phase |
| QPSK (option 1) | | | | | | | | | |
| (-1,-1) | Ib | I | Ib | I | Qb | Q | Qb | Q | -135° |
| (-1,1) | Ib | I | Ib | i | Q | Qb | Q | Qb | 135° |
| (1,1) | I | Ib | I | Ib | Q | Qb | Q | Qb | 45° |
| (1,-1) | I | Ib | I | Ib | Qb | Q | Qb | Q | -45° |
| QPSK (option 2a) | | | | | | | | | |
| (-1,0) | Ib | I | Ib | I | 0 | 0 | 1 | 1 | 180° |
| (0,1) | 0 | 0 | 1 | 1 | Q | Qb | Q | Qb | 90° |
| (1,0) | I | Ib | I | Ib | 0 | 0 | 1 | 1 | 0° |
| (0,-1) | 0 | 0 | 1 | 1 | Qb | Q | Qb | Q | -90° |
| QPSK (option 2b) | | | | | | | | | |
| (-1,0) | Ib | I | Ib | I | 0 | 0 | 1 | 1 | 180° |
| (0,1) | Q | Qb | Q | Qb | 0 | 0 | 1 | 1 | 90° |
| (1,0) | I | Ib | I | Ib | 0 | 0 | 1 | 1 | 0° |
| (0,-1) | Qb | Q | Qb | Q | 0 | 0 | 1 | 1 | -90° |
| 8-PSK | | | | | | | | | |
| (-1,-1) | Ib | I | Ib | I | Qb | Q | Qb | Q | -135° |
| (-1,0) | Ib | I | Ib | I | 0 | 0 | 1 | 1 | 180° |
| (-1,1) | Ib | I | Ib | i | Q | Qb | Q | Qb | 135° |
| (0,1) | 0 | 0 | 1 | 1 | Q | Qb | Q | Qb | 90° |
| (1,1) | I | Ib | I | Ib | Q | Qb | Q | Qb | 45° |
| (1,0) | I | Ib | I | Ib | 0 | 0 | 1 | 1 | 0° |
| (1,-1) | I | Ib | I | Ib | Qb | Q | Qb | Q | -45° |
| (0,-1) | 0 | 0 | 1 | 1 | Qb | Q | Qb | Q | -90° |

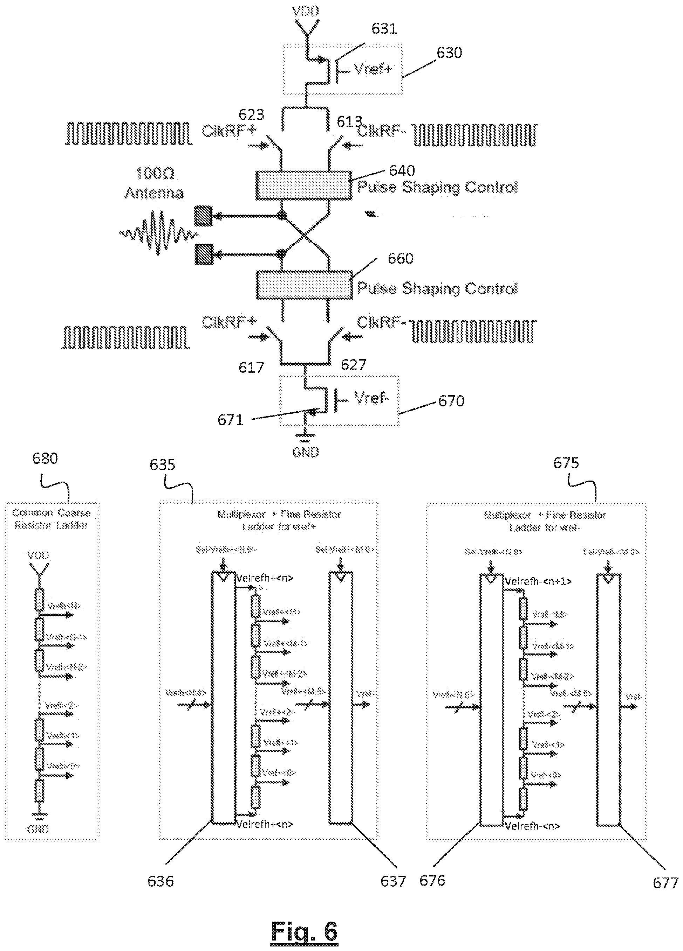

La Fig. 6 représente de manière schématique un émetteur UWB selon l'architecture de la Fig. 3, équipé d'un étage de contrôle d'amplitude selon une première variante d'implémentation.

On a représenté sur la figure l'étage d'amplification de puissance composé des commutateurs 613 et 617 dans la première branche, et des commutateurs 623 et 627 dans la seconde branche. L'étage de contrôle d'enveloppe est en série avec l'étage d'amplification de puissance. Il est composé des modules 640 et 660, identiques aux modules 440 et 460 déjà décrits.

L'étage de contrôle d'amplitude, également en série avec l'étage d'amplification de puissance et l'étage de contrôle d'enveloppe, est composé d'un premier module de contrôle d'amplitude, 630, situé entre la première extrémité commune et la tension d'alimentation, ainsi que d'un second module de contrôle d'amplitude, 670, situé entre la seconde extrémité et la masse. Plus précisément, le premier module, 630, est constitué ici d'un transistor PMOS unique, 631, dont la source est reliée à l'alimentation VDD et le drain est relié à la première extrémité commune. A cette première extrémité commune sont connectées, d'une part, la source du premier transistor de commutation de la première branche, 613, et, d'autre part, la source du premier transistor de commutation de la seconde branche, 623. De même, le second module, 670, est constitué d'un transistor NMOS unique, 671, dont la source est reliée à la masse et le drain est relié à la seconde extrémité commune. A cette seconde extrémité commune sont connectées, d'une part la source du second transistor de la première branche, 617, et, d'autre part la source du second transistor de la seconde branche, 627.

Le signal appliqué sur la grille du transistor 631, Vref+, est généré au moyen d'une échelle de tension grossière, 680, dont les sorties sont fournies à une première échelle de tension fine 635. De manière similaire, le signal appliqué sur la grille du transistor 671, Vref-, est généré au moyen de ladite échelle de tension grossière, 680, dont les sorties sont fournies à une seconde échelle de tension fine, 675.

L'échelle de tension grossière, 680, est commune à la génération des signaux Vref+ et Vref-. Celle-ci est constituée simplement d'un premier ensemble de N+1 résistances élémentaires de même valeur, en série entre la tension d'alimentation VDD et la masse.

Les N+1 tensions de référence Vrefh <0>, Vrefh <1>,..., Vrefh <N>, disponibles aux noeuds intermédiaires de l'échelle de tension grossière sont fournies au multiplexeur 636 en entrée de la première échelle de tension fine 635 . Ce multiplexeur d'entrée sélectionne au moyen d'un premier signal de sélection SelVrefh+ deux tensions de référence successives Vrefh <n> et Vrefh <n+1> parmi les N+1 tensions de référence disponibles de 680.. La seconde échelle de tension fine comprend M+1 résistances élémentaires (de même valeur) disposées en série entre les deux tensions de référence ainsi sélectionnées Vrefh <n> et Vrefh <n+1>. Les M+1 tensions de référence, Vrefl+ <0>,..., Vrefl+ <M>,..., disponibles aux noeuds intermédiaires de cette seconde échelle sont fournies à un multiplexeur de sortie 637. Ce multiplexeur de sortie sélectionne au moyen d'un second signal de sélection SelVrefl+ une tension de référence Vrefl+ <m>,..., parmi les M+1 disponibles et la fournit en sortie comme signal Vref+.

De manière similaire, les N+1 tensions de référence Vrefh <0>, Vrefh <1>,..., Vrefh <N>, disponibles aux noeuds intermédiaires de l'échelle de tension grossière sont fournies au multiplexeur 676, en entrée de la seconde échelle de tension fine 675 . Ce multiplexeur d'entrée sélectionne au moyen d'un premier signal de sélection SelVrefh- deux tensions de référence successives Vrefh- <n> et Vrefh- <n+1> parmi les N+1 tensions de référence disponibles. Une seconde échelle de tension fine comprend M+1 résistances élémentaires (de même valeur) disposées en série entre les deux tensions de référence ainsi sélectionnées Vrefh- <n> et Vrefh- <n+1>. Les M+1 tensions de référence, Vrefl-<0>,..., Vrefl- <M>,..., disponibles aux noeuds intermédiaires de cette seconde échelle sont fournies à un multiplexeur de sortie 677. Ce multiplexeur de sortie sélectionne au moyen d'un second signal de sélection SelVrefl- une tension de référence Vrefl- <m>,..., parmi les M+1 disponibles et la fournit en sortie comme signal Vref-.

L'application du signal Vref+ sur la grille du transistor 631 et celle du signal Vref-sur la grille du transistor 671, permet d'ajuster les résistances drain-source de ces transistors et donc d'abaisser la tension haute par rapport à la tension d'alimentation (au moyen de Vref+) ainsi que d'élever la tension minimale par rapport à la masse (au moyen de Vref-) lorsque ces transistors sont parcourus par un courant. Ainsi, l'action conjointe des transistors 631 et 671 permet de faire varier l'amplitude de l'enveloppe de manière homothétique et sur une large dynamique, indépendamment du contrôle de la forme de l'enveloppe.

La consommation des circuits générant les signaux Vref+ et Vref- se limite à celle induite par le courant (quelques μA) circulant dans les échelles de tension.

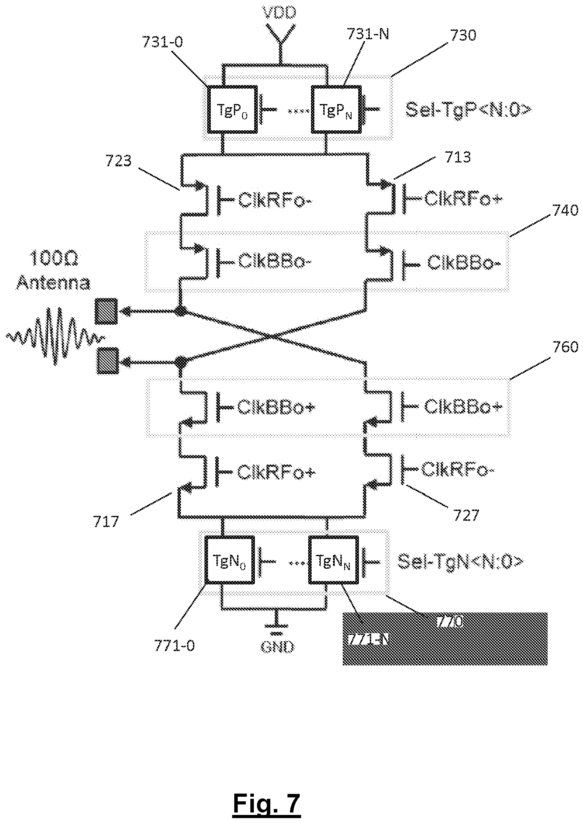

La Fig. 7 représente de manière schématique un émetteur UWB selon l'architecture de la Fig. 3, équipé d'un étage de contrôle d'amplitude selon une seconde variante d'implémentation.

L'étage d'amplification de puissance composé des commutateurs 713 et 717 dans la première branche, et des commutateurs 723 et 727 dans la seconde branche est identique à celui de la Fig. 6. De même, l'étage de contrôle de la forme de l'enveloppe est constitué des modules 740 et 760, respectivement identiques aux modules 640 et 660 de la Fig. 6.

Le premier module de contrôle d'amplitude, 730, situé entre la première extrémité commune et la tension d'alimentation, ainsi que le second module de contrôle d'amplitude, 770, situé entre la seconde extrémité commune et la masse, diffèrent en revanche des modules correspondants 630 et 670 de la Fig. 6.

Le premier module de contrôle d'amplitude, 730, est en effet constitué d'une pluralité de premières portes de transmission (*transmission gates*), 731-0, 731-1,...,731-N, montées en parallèle entre la tension d'alimentation VDD et la première extrémité commune reliant les sources des transistors PMOS 713 et 723. Les premières portes de transmission peuvent être constituées de simples transistors PMOS. Des variantes de réalisation de ces portes de transmission pourront être envisagées par l'homme du métier.

Ainsi, en sélectionnant les premières portes de transmission au moyen des premiers signaux de sélection Sel-TgP <0>, Sel-TgP <1>,..., Sel-TGP <N>, il est possible d'ajuster la résistance équivalente entre la tension VDD et le noeud commun des sources des transistors MOS. Dès lors qu'un courant passe dans le pont, il est par conséquent possible d'abaisser la tension haute à l'aide des signaux de sélection précités.

De manière similaire, le second module de contrôle d'amplitude, 770, est constitué d'une pluralité de secondes portes de transmission, 771-0, 771-1,...,771-N, montées en parallèle entre la seconde extrémité commune reliant les sources des transistors NMOS 717 et 727, et la masse. Les secondes portes de transmission peuvent être constituées de simples transistors NMOS. Des variantes de réalisation de ces portes de transmission pourront être envisagées par l'homme du métier.

Dès lors qu'un courant passe dans le pont, il est par conséquent possible d'élever la tension basse à l'aide des seconds signaux de sélection Sel-TgN <0>, Sel-TgN <1>,..., Sel-TgN <N> commandant respectivement les portes 771-0, 771-1,...,771-N.

La variante d'implémentation des modules de contrôle d'amplitude illustrée en Fig. 7 présente l'avantage, par rapport à celle illustrée en Fig. 6, de ne pas consommer de puissance en statique. En effet, il n'est pas nécessaire ici de prévoir d'échelles de résistances pour générer des tensions de référence et donc aucun courant n'est consommé hormis celui nécessaire à la génération des impulsions à travers la charge.

D'autres variantes d'implémentation des modules de contrôle d'amplitude pourront encore être envisagées sans sortir du cadre de la présente invention. En particulier, les modules de contrôle d'amplitude pourront être réalisés au moyen de régulateurs de tension LDO (Low DropOut regulator).

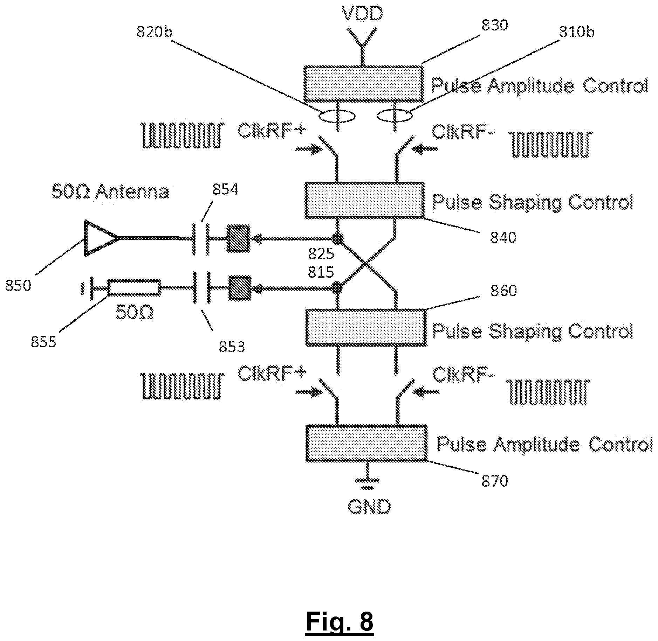

La Fig. 8 représente de manière schématique l'architecture générale d'un émetteur UWB, selon un deuxième mode de réalisation de l'invention.

Les étages de contrôle d'amplitude, d'amplification de puissance et de contrôle de forme d'enveloppe sont identiques à ceux du premier mode de réalisation décrit en relation avec la Fig. 3. Leur description ne sera donc pas reprise ici.

A la différence du premier mode de réalisation cependant, l'antenne UWB, 850, n'est pas alimentée en mode différentiel mais est à alimentation unique (*single feed antenna*). Plus précisément, le point milieu 815 de la première branche 810b, constituant une première sortie de l'émetteur, est connecté à une charge caractéristique de 50 Ω, 855, via une capacité de découplage, 853. Le point milieu 825, de la seconde branche, 820b, constituant une seconde sortie de l'émetteur est connecté à travers une capacité de découplage, 854, à l'antenne 850. Les capacités 853 et 854 sont de valeurs identiques et ont pour objet de ne pas imposer de point de polarisation à la sortie de l'émetteur.

L'homme du métier comprendra que les différentes variantes et exemples de réalisation exposés en relation avec le premier mode de réalisation trouvent également à s'appliquer au deuxième mode de réalisation.

Dans le premier et le deuxième mode de réalisation, on a supposé que le contrôle d'amplitude était effectué par un premier module de contrôle d'amplitude opérant à partir de la borne d'alimentation pour faire varier une tension haute et par un second module de contrôle d'amplitude opérant à partir de la masse pour faire varier une tension basse. L'homme du métier comprendra toutefois qu'un seul module de contrôle d'amplitude pourra alternativement être prévu, soit pour faire varier la tension haute soit pour faire varier la tension basse.

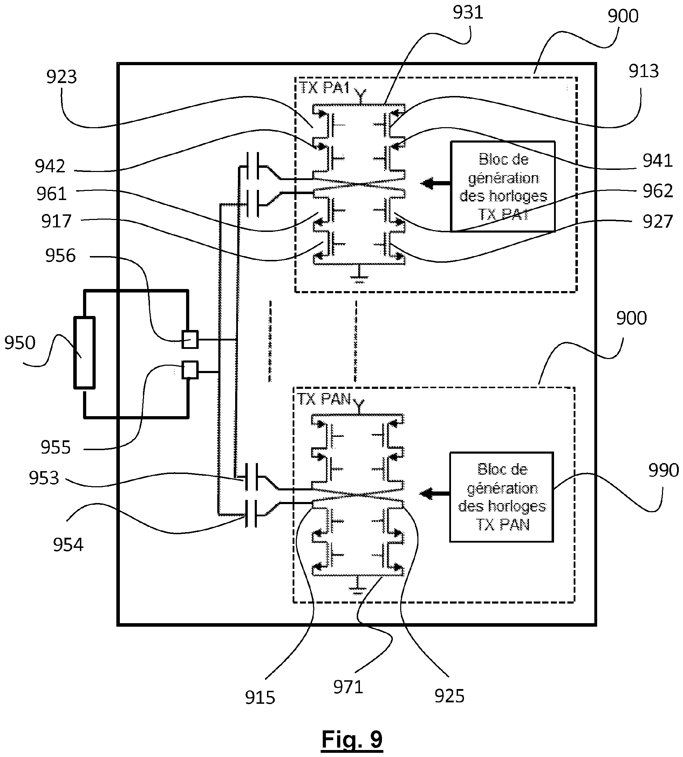

La Fig. 9 représente de manière schématique l'architecture générale d'un émetteur UWB selon un troisième mode de réalisation de l'invention.

Le troisième mode de réalisation diffère des précédents en ce qu'il comprend une pluralité de ponts en H montés en parallèle, les impulsions UWB de chacun des ponts étant contrôlées de manière indépendante et étant combinées aux bornes d'une antenne UWB commune à travers des capacités de découplage.

Dans ce mode de réalisation la structure des ponts en H peut être conforme au premier ou au second mode de réalisation, tels que décrits plus haut.

Pour des raisons de simplification et sans préjudice de généralisation, nous supposerons dans la suite que la structure des ponts est conforme au premier mode de réalisation.

Plus précisément, l'émetteur UWB comprend une pluralité *N* de ponts en H montés en parallèle, 900, portant les références spécifiques TX PA1,...,TX PAN. Les premiers points milieux, 915, respectifs des premières branches de chacun de ces ponts sont connectés à une première borne commune 955 à travers une pluralité de premières capacités de découplage de pont, 954. De même, les seconds points milieux, 925, des secondes branches de ces ponts, sont connectés à une seconde borne commune, 956, à travers une pluralité de secondes capacités de découplage de pont, 953.

L'antenne UWB, 950, est connectée entre la première borne commune et la seconde borne commune. On comprendra toutefois que dans le cas où la structure des ponts est conforme au second mode de réalisation l'antenne UWB sera connectée seulement à l'une de ces bornes communes, l'autre borne commune étant connectée à la masse via une impédance caractéristique.

Les capacités de découplage de pont assurent l'absence d'interaction entre les composantes continues des différents ponts tout en permettant la combinaison, aux bornes de l'antenne, des composantes alternatives des impulsions UWB générées par les différents ponts.

Chaque pont en H comprend un premier module de contrôle d'amplitude (non représenté) entre la borne d'alimentation et la première extrémité commune, 931, aux deux branches dudit pont, permettant de faire varier la tension haute à cette première extrémité commune. De même, un second module de contrôle d'amplitude (non représenté) entre la seconde extrémité commune, 971, aux première et seconde branches dudit pont et la masse, permet de faire varier la tension basse à la seconde extrémité commune.

Chaque pont en H, comprend comme dans les modes de réalisation précédents, un premier module de contrôle d'enveloppe 941,942 entre les premiers commutateurs 913, 923 et les points milieu 915, 925 respectifs des première et seconde branches, destiné à mettre en forme l'enveloppe de la partie positive de l'impulsion UWB générée par ce pont, au moyen d'un premier signal en bande de base (ClkBB-) associé à ce pont.

Il comprend en outre un second module de contrôle d'enveloppe 961,962 entre lesdits points milieux 915, 925 et les seconds commutateurs de ce pont, 917, 927, destiné à mettre en forme l'enveloppe de la partie négative de l'impulsion UWB générée par ce pont au moyen d'un second signal en bande de base (ClkBB+) associé à ce pont.

Comme dans les modes de réalisation précédents, pour chaque pont, 900, l'état de commutation du premier (resp. second) commutateur de la première branche est opposé à l'état de commutation du premier (resp. second) commutateur de la seconde branche, chaque commutateur étant commuté à une même fréquence centrale RF donnant la fréquence centrale des impulsions UWB générées par ce pont.

Il convient de noter que les premiers modules de contrôle d'enveloppe des différents ponts sont contrôlés par des premiers signaux en bande de base indépendants les uns des autres. De même les seconds modules de contrôle d'enveloppe des différents ponts sont contrôlés par des seconds signaux en bande de base indépendants les uns des autres. Les premiers et seconds signaux en bande de base sont générés par des modules indépendants, 990.

Les premiers et seconds commutateurs des premières branches des différents ponts sont avantageusement commutés à la même fréquence RF par un même signal ClkRF0+. De même, les premiers et seconds commutateurs des secondes branches des différents ponts sont commutés à cette même fréquence RF par un même signal ClkRF0-, inverse du précédent. Les signaux de contrôle de ces commutateurs peuvent par conséquent être générés par un module commun. Alternativement, ils peuvent être générés par les modules indépendants, 990, à partir d'une horloge RF commune.

Le troisième mode de réalisation permet de générer des trains d'impulsions élémentaires, les impulsions élémentaires d'un train pouvant être très rapprochées voire se chevaucher temporellement avec une grande flexibilité de contrôle. En particulier, la polarité de chaque impulsion élémentaire peut être contrôlée individuellement au moyen des premiers et seconds signaux en bande de base. Cette flexibilité de contrôle permet également de s'assurer de la conformité du train d'impulsions élémentaires aux masques spectraux UWB définis dans les normes en vigueur (ETSI, FCC, ARIB notamment).

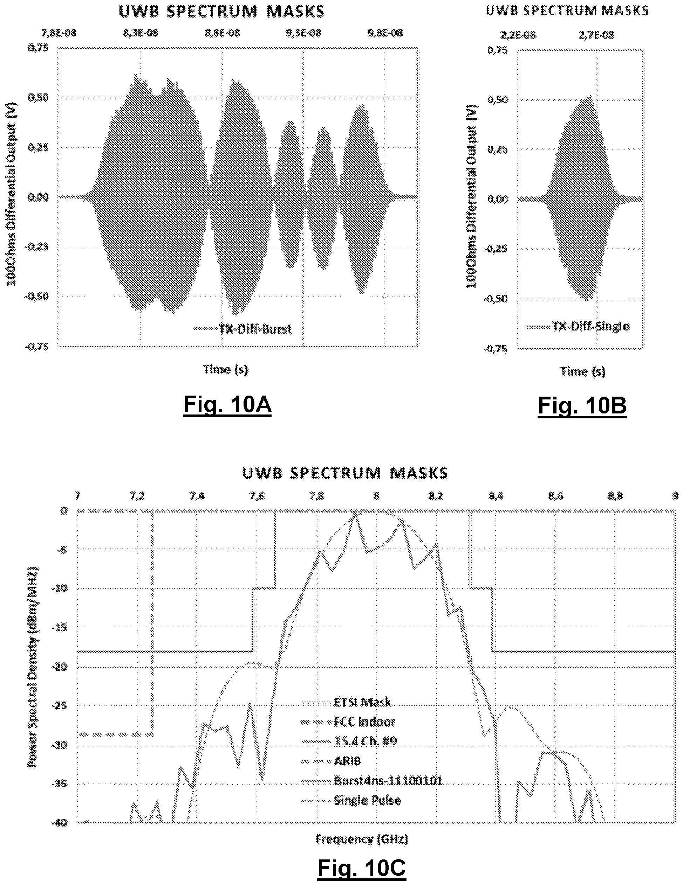

La Fig. 10A représente dans le domaine temporel un train d'impulsions élémentaires pouvant être généré par l'émetteur d'impulsions UWB de la Fig. 9 et la Fig. 10B représente une impulsion élémentaire de ce train.

La Fig. 10C représente le spectre du train d'impulsions élémentaires de la Fig. 10 et celui de l'impulsion élémentaire de la Fig. 10B. On remarque que les deux spectres sont bien conformes aux masques spectraux précités.

Enfin, il est essentiel de souligner que la solution proposée est beaucoup plus simple que celle qui aurait consisté à définir le support temporel global du train d'impulsions élémentaires pour un seul pont en H avec une résolution de l'ordre d'une fraction de la période RF.

## Revendications

1. Emetteur d'impulsions UWB comprenant au moins un pont en H, ledit pont présentant une première branche (310b) et une seconde branche (320b) en parallèle, une première extrémité commune aux première et seconde branches étant reliée à une tension haute et une seconde extrémité commune aux première et seconde branches étant reliée à une tension basse, la première branche comprenant un premier point milieu (315) et la seconde branche comprenant un second point milieu (325), une antenne UWB (350) étant connectée au premier point milieu et/ou au second point milieu, la première branche (310b) comprenant un premier commutateur (313) entre ladite première extrémité commune et le premier point milieu ainsi qu'un second commutateur (317) entre le premier point milieu et la seconde extrémité commune, la seconde branche (320b) comprenant un premier commutateur (323) entre ladite première extrémité commune et le second point milieu ainsi qu'un second commutateur (327) entre le second point milieu et la seconde extrémité commune, les premier et second commutateurs d'une branche étant dans des états de commutation opposés et l'état de commutation du premier, resp. second, commutateur de la première branche étant opposé à l'état de commutation du premier, resp. second, commutateur de la seconde branche, chaque commutateur étant commuté à une même fréquence RF donnant la fréquence centrale des impulsions UWB, l'émetteur d'impulsions UWB comprenant

- un premier module de contrôle d'amplitude (330) entre une borne d'alimentation et la première extrémité commune, permettant de faire varier ladite tension haute à la première extrémité commune, et/ou
- un second module de contrôle d'amplitude (370) entre la seconde extrémité commune et la masse, permettant de faire varier ladite tension basse à la seconde extrémité commune ;
- un premier module de contrôle d'enveloppe (340) entre les premiers commutateurs (313, 323) et les points milieu (315,325) des deux branches, destiné à mettre en forme l'enveloppe de la partie positive d'une impulsion UWB au moyen d'un premier signal en bande de base ;
- un second module de contrôle d'enveloppe (360) entre les points milieu (315,325) et les seconds commutateurs (317,327) des deux branches, destiné à mettre en forme l'enveloppe de la partie négative d'une impulsion UWB au moyen d'un second signal en bande de base.

**2.** Emetteur d'impulsions UWB selon la revendication 1, **caractérisé en ce que** l'antenne UWB est connectée entre le premier point milieu et le second point milieu.

**3.** Emetteur d'impulsions UWB selon la revendication 1, **caractérisé en ce que** l'antenne UWB est connectée au premier point milieu via une première capacité de découplage, et que le second point milieu est connecté à la masse via une seconde capacité de découplage en série avec une impédance caractéristique.

**4.** Emetteur d'impulsions UWB selon l'une des revendications précédentes, **caractérisé en ce que** les premiers commutateurs sont des transistors PMOS et les seconds commutateurs sont des transistors NMOS, les premier et second commutateurs de la première branche étant contrôlés par un premier signal de commande et les premier et second commutateurs de la seconde branche étant contrôlés par un second signal de commande, inverse du premier signal de commande.

**5.** Emetteur d'impulsions UWB selon l'une des revendications précédentes 1-3 **caractérisé en ce que** la première branche comporte deux premiers commutateurs en parallèle (513-1,513-2) entre ladite première extrémité commune et le premier point milieu, ainsi que deux seconds commutateurs en parallèle (517-1,517-2) entre le premier point milieu et la seconde extrémité commune, et que la seconde branche comporte également deux premiers commutateurs en parallèle (523-1,523-2) entre ladite première extrémité commune et le second point milieu, ainsi que deux seconds commutateurs en parallèle (527-1,527-2) entre le second point milieu et la seconde extrémité commune, les signaux de commutation respectifs des premiers commutateurs des première et seconde branches ainsi que des signaux de commutation respectifs des seconds commutateurs des première et seconde branches étant fournis par un multiplexeur recevant en entrée des signaux d'horloge à la fréquence RF, respectivement en phase, en quadrature de phase, en opposition de phase et en opposition de quadrature de phase, ledit multiplexeur étant commandé par les composantes (I,Q) d'un symbole QPSK ou 8-PSK à transmettre.

**6.** Emetteur d'impulsions UWB selon l'une des revendications précédentes, **caractérisé en ce que** :

- le premier module de contrôle d'amplitude (630) comprend un transistor PMOS (631) dont la source est connectée à la tension d'alimentation et le drain est connecté à la première extrémité commune, ledit transistor PMOS étant commandé par une tension de référence haute, obtenue comme la tension en un noeud intermédiaire d'une première échelle de résistances (635) ; et/ou que
- le second module de contrôle d'amplitude (670) comprend un transistor NMOS (671) dont la source est connectée à la seconde extrémité commune et le drain est connecté à la masse, ledit transistor NMOS étant commandé par une tension de référence basse, obtenue comme la tension en un noeud intermédiaire d'une seconde échelle de résistances (675).

**7.** Emetteur d'impulsions UWB selon la revendication 6, **caractérisé en ce que** la première échelle de résistances est connectée entre deux premiers noeuds intermédiaires consécutifs d'une échelle de résistances grossière (680), elle-même connectée entre la tension d'alimentation et la masse, ces deux premiers noeuds intermédiaires consécutifs étant sélectionnés au moyen d'un premier multiplexeur (636), et que la seconde échelle de résistances est connectée entre deux seconds noeuds intermédiaires consécutifs de ladite échelle de résistances grossière, ces deux seconds noeuds intermédiaires consécutifs étant sélectionnés au moyen d'un second multiplexeur (676).

8. Emetteur d'impulsions UWB selon l'une des revendications 1 à 5, **caractérisé en ce que** :

   - le premier module de contrôle d'amplitude comprend une pluralité de premières portes de transmission (731-0,731-1,...,731-N) montées en parallèle, dont les entrées sont connectées à la tension d'alimentation et les sorties sont connectées à la première extrémité commune, la pluralité de premières portes de transmission étant individuellement commandées par une pluralité de premiers signaux de sélection (Sel-TgP <0>,..., Sel-TGP <N>) ; et/ou que
   - le second module de contrôle d'amplitude comprend une pluralité de secondes portes de transmission (771-0,771-1,...,771-N) montées en parallèle, dont les entrées sont connectées à la seconde extrémité commune et les sorties sont connectées à la masse, la pluralité de secondes portes de transmission étant individuellement commandées par une pluralité de seconds signaux de sélection (Sel-TgN <0>,..., Sel-TGN <N>).

9. Emetteur d'impulsions UWB selon l'une des revendications 1 à 5, **caractérisé en ce que** le premier module de contrôle d'amplitude comprend un premier régulateur de tension LDO et/ou le second module de contrôle d'amplitude comprend un second régulateur de tension LDO.

10. Emetteur d'impulsions UWB selon l'une des revendications précédentes, **caractérisé en ce que** :

    - le premier module de contrôle d'enveloppe comprend un premier commutateur (441) dans la première branche ainsi qu'un premier commutateur dans la seconde branche (442), lesdits premiers commutateurs du premier module de contrôle d'enveloppe étant commandés au moyen d'un premier signal de contrôle de forme (ClkBB0-) ;
    - le second module de contrôle d'enveloppe comprend un second commutateur (461) dans la première branche ainsi qu'un second commutateur dans la seconde branche (462), lesdits seconds commutateurs du second module de contrôle étant commandés au moyen d'un second signal de contrôle de forme (ClkBB0+).

11. Emetteur d'impulsions UWB selon la revendication 10, **caractérisé en ce que** les premiers commutateurs du premier module de contrôle d'enveloppe sont des transistors PMOS et les seconds commutateurs du second module de contrôle d'enveloppe sont des seconds transistors NMOS.

12. Emetteur d'impulsions UWB selon la revendication 11, **caractérisé en ce que** le premier signal de contrôle de forme est généré en intégrant un premier courant dans un circuit RC1 où C1 est la somme des capacités grille-source des transistors PMOS du premier module de contrôle d'enveloppe et que le second signal de contrôle de forme est généré en intégrant un second courant dans un circuit RC2 où C2 est la somme des capacités grille-source des transistors NMOS du second module de contrôle d'enveloppe.

13. Emetteur d'impulsions UWB selon l'une quelconque des revendications précédentes, **caractérisé en ce qu'**il comprend :

    une pluralité de ponts en H montés en parallèle, les premiers point milieux des premières branches de ces ponts étant connectés à une première borne commune à travers une pluralité de premières capacités de découplage de pont, les seconds points milieux des secondes branches de ces ponts étant connectés à une seconde borne commune à travers une pluralité de secondes capacités de découplage de pont, l'antenne UWB étant connectée à la première et/ou la seconde borne commune ;

    et, pour chacun des ponts en H :

    un premier module de contrôle d'amplitude entre une borne d'alimentation et la première extrémité commune aux première et seconde branches dudit pont, permettant de faire varier la tension haute à cette première extrémité commune, et/ou
    un second module de contrôle d'amplitude entre la seconde extrémité commune aux première et seconde branches dudit pont et la masse, permettant de faire varier la tension basse à la seconde extrémité commune ;
    un premier module de contrôle d'enveloppe entre les premiers commutateurs dudit pont et les points milieux des première et seconde branches de ce pont, destiné à mettre en forme l'enveloppe de la partie positive de l'impulsion UWB générée par ce pont, au moyen d'un premier signal en bande de base associé à ce pont ;
    un second module de contrôle d'enveloppe entre les points milieux des premières et seconde branches dudit pont et les seconds commutateurs de ce pont, destiné à mettre en forme l'enveloppe de la partie négative de l'impulsion UWB générée par ce pont au moyen d'un second signal en bande de base associé à ce pont, les premiers signaux en bande de base des différents ponts étant indépendants les uns des autres et les seconds signaux en bande de base des différents ponts étant également indépendants les uns des autres.

14. Emetteur d'impulsions UWB selon la revendication 13, **caractérisé en ce que** le premier module de contrôle d'amplitude et le second module de contrôle d'amplitude sont communs à l'ensemble des ponts en H.

15. Emetteur d'impulsions UWB selon la revendication 13 ou 14, **caractérisé en ce que** les premiers et seconds commutateurs des premières branches des différents ponts sont commutés au moyen d'un premier signal de commutation RF et que les premiers et seconds commutateurs des secondes branches des différents ponts sont commutés au moyen d'un second signal de commutation RF, inverse du premier signal de commutation RF.

**Patentansprüche**

1. UWB-Impuls-Emitter, der mindestens eine H-Brücke umfasst, wobei die Brücke einen ersten Zweig (310b) und einen parallelen zweiten Zweig (320b) aufweist, wobei ein erstes gemeinsames Ende des ersten und des zweiten Zweiges an eine hohe Spannung angeschlossen ist und ein zweites gemeinsames Ende des ersten und des zweiten Zweiges an eine niedrige Spannung angeschlossen ist, wobei der erste Zweig einen ersten Mittelpunkt (315) umfasst und der zweite Zweig einen zweiten Mittelpunkt (325) umfasst, wobei eine UWB-Antenne (350) mit dem ersten Mittelpunkt und/oder dem zweiten Mittelpunkt verbunden ist, wobei der erste Zweig (310b) einen ersten Schalter (313) zwischen dem ersten gemeinsamen Ende und dem ersten Mittelpunkt sowie einen zweiten Schalter (317) zwischen dem ersten Mittelpunkt und dem zweiten gemeinsamen Ende umfasst, wobei der zweite Zweig (320b) einen ersten Schalter (323) zwischen dem ersten gemeinsamen Ende und dem zweiten Mittelpunkt sowie einen zweiten Schalter (327) zwischen dem zweiten Mittelpunkt und dem zweiten gemeinsamen Ende umfasst, wobei sich der erste und der zweite Schalter eines Zweiges in entgegengesetzten Schaltzuständen befinden und der Schaltzustand des ersten bzw. zweiten Schalters des ersten Zweiges dem Schaltzustand des ersten bzw. zweiten Schalters des zweiten Zweiges entgegengesetzt ist, wobei jeder Schalter mit derselben HF-Frequenz geschaltet wird, die die Mittenfrequenz der UWB-Impulse ergibt, wobei der UWB-Impuls-Emitter umfasst

   - ein erstes Amplitudensteuermodul (330) zwischen einem Versorgungsanschluss und dem ersten gemeinsamen Ende, mit dem die hohe Spannung am ersten gemeinsamen Ende variiert werden kann, und/oder
   - ein zweites Amplitudensteuermodul (370) zwischen dem zweiten gemeinsamen Ende und der Masse, mit dem die niedrige Spannung am zweiten gemeinsamen Ende variiert werden kann;
   - ein erstes Hüllkurvensteuermodul (340) zwischen den ersten Schaltern (313, 323) und den Mittelpunkten (315, 325) der zwei Zweige, das dazu bestimmt ist, die Hüllkurve des positiven Teils eines UWB-Impulses mittels eines ersten Basisbandsignals zu formen;
   - ein zweites Hüllkurvensteuermodul (360) zwischen den Mittelpunkten (315, 325) und den zweiten Schaltern (317, 327) der zwei Zweige, das dazu bestimmt ist, die Hüllkurve des negativen Teils eines UWB-Impulses mittels eines zweiten Basisbandsignals zu formen.

2. UWB-Impuls-Emitter nach Anspruch 1, **dadurch gekennzeichnet, dass** die UWB-Antenne zwischen den ersten Mittelpunkt und den zweiten Mittelpunkt geschaltet ist.

3. UWB-Impuls-Emitter nach Anspruch 1, **dadurch gekennzeichnet, dass** die UWB-Antenne über eine erste Entkopplungskapazität mit dem ersten Mittelpunkt verbunden ist, und dass der zweite Mittelpunkt über eine zweite Entkopplungskapazität in Reihe mit einer charakteristischen Impedanz mit der Masse verbunden ist.

4. UWB-Impuls-Emitter nach einem der vorstehenden Ansprüche, **dadurch gekennzeichnet, dass** die ersten Schalter PMOS-Transistoren sind und die zweiten Schalter NMOS-Transistoren sind, wobei der erste und der zweite Schalter des ersten Zweiges über ein erstes Ansteuersignal gesteuert werden und der erste und der zweite Schalter des zweiten Zweiges über ein zweites Ansteuersignal gesteuert werden, das zum ersten Ansteuersignal invers ist.

5. UWB-Impuls-Emitter nach einem der vorstehenden Ansprüche 1-3, **dadurch gekennzeichnet, dass** der erste Zweig zwei erste parallele Schalter (513-1, 513-2) zwischen dem ersten gemeinsamen Ende und dem ersten Mittelpunkt sowie zwei zweite parallele Schalter (517-1, 517-2) zwischen dem ersten Mittelpunkt und dem zweiten gemeinsamen Ende umfasst, und dass der zweite Zweig ebenfalls zwei erste parallele Schalter (523-1, 523-2) zwischen dem ersten gemeinsamen Ende und dem zweiten Mittelpunkt sowie zwei zweite parallele Schalter (527-1, 527-2) zwischen dem zweiten Mittelpunkt und dem zweiten gemeinsamen Ende umfasst, wobei die jeweiligen Schaltsignale der ersten Schalter des ersten und des zweiten Zweiges sowie jeweilige Schaltsignale der zweiten Schalter des ersten und des zweiten Zweiges von einem Multiplexer geliefert werden, der am Eingang Taktsignale mit der HF-Frequenz jeweils in Phase, in Phasenquadratur, in entgegengesetzter Phase und in entgegengesetzter Phasenquadratur empfängt, wobei der Multiplexer über die Komponenten (I,Q) eines zu übertragenden QPSK- oder 8-PSK-Symbols angesteuert wird.

6. UWB-Impuls-Emitter nach einem der vorstehenden Ansprüche, **dadurch gekennzeichnet, dass**:

   - das erste Amplitudensteuermodul (630) einen PMOS-Transistor(631) umfasst, dessen Quelle mit der Versorgungsspannung verbunden ist und dessen Senke mit dem ersten gemeinsamen Ende verbunden ist, wobei der PMOS-Transistor über eine hohe Referenzspannung angesteuert wird, die als die Spannung an einem Zwischenknoten einer ersten Widerstandsleiter (635) erhalten wird; und/oder dass
   - das zweite Amplitudensteuermodul (670) einen NMOS-Transistor (671) umfasst, dessen Quelle mit dem zweiten gemeinsamen Ende verbunden ist und dessen Senke mit der Masse verbunden ist, wobei der NMOS-Transistor über eine niedrige Referenzspannung angesteuert wird, die als die Spannung an einem Zwischenknoten einer zweiten Widerstandsleiter (675) erhalten wird.

7. UWB-Impuls-Emitter nach Anspruch 6, **dadurch gekennzeichnet, dass** die erste Widerstandsleiter zwischen zwei erste aufeinanderfolgende Zwischenknoten einer groben Widerstandsleiter (680) geschaltet ist, die ihrerseits zwischen die Versorgungsspannung und die Masse geschaltet ist, wobei diese zwei ersten aufeinanderfolgenden Zwischenknoten mittels eines ersten Multiplexers (636) ausgewählt werden, und dass die zweite Widerstandsleiter zwischen zwei zweite aufeinanderfolgende Zwischenknoten der groben Widerstandsleiter geschaltet ist, wobei diese zwei zweiten aufeinanderfolgenden Zwischenknoten mittels eines zweiten Multiplexers (676) ausgewählt werden.

8. UWB-Impuls-Emitter nach einem der Ansprüche 1 bis 5, **dadurch gekennzeichnet, dass**:

   - das erste Amplitudensteuermodul eine Vielzahl von parallel geschalteten ersten Übertragungsgattern (731-0, 731-1, ..., 731-N) umfasst, deren Eingänge mit der Versorgungsspannung verbunden sind und deren Ausgänge mit dem ersten gemeinsamen Ende verbunden sind, wobei die Vielzahl von ersten Übertragungsgattern einzeln über eine Vielzahl von ersten Auswahlsignalen (Sel-TgP <0>, ..., Sel-TGP <N>) angesteuert werden; und/oder dass
   - das zweite Amplitudensteuermodul eine Vielzahl von parallel geschalteten zweiten Übertragungsgattern (771-0, 771-1, ..., 771-N) umfasst, deren Eingänge mit dem zweiten gemeinsamen Ende verbunden sind und deren Ausgänge mit der Masse verbunden sind, wobei die Vielzahl von zweiten Übertragungsgattern einzeln über eine Vielzahl von zweiten Auswahlsignalen (Sel-TgN <0>, ..., Sel-TGN <N>) angesteuert werden.

9. UWB-Impuls-Emitter nach einem der Ansprüche 1 bis 5, **dadurch gekennzeichnet, dass** das erste Amplitudensteuermodul einen ersten LDO-Spannungsregler umfasst und/oder das zweite Amplitudensteuermodul einen zweiten LDO-Spannungsregler umfasst.

10. UWB-Impuls-Emitter nach einem der vorstehenden Ansprüche, **dadurch gekennzeichnet, dass**:

    - das erste Hüllkurvensteuermodul einen ersten Schalter (441) im ersten Zweig sowie einen ersten Schalter im zweiten Zweig (442) umfasst, wobei die ersten Schalter des ersten Hüllkurvensteuermoduls mittels eines ersten Formsteuersignals (ClkBBO-) angesteuert werden;
    - das zweite Hüllkurvensteuermodul einen zweiten Schalter (461) im ersten Zweig sowie einen zweiten Schalter im zweiten Zweig (462) umfasst, wobei die zweiten Schalter des zweiten Steuermoduls mittels eines zweiten Formsteuersignals (ClkBB0+) angesteuert werden.

11. UWB-Impuls-Emitter nach Anspruch 10, **dadurch gekennzeichnet, dass** die ersten Schalter des ersten Hüllkurvensteuermoduls PMOS-Transistoren sind und die zweiten Schalter des zweiten Hüllkurvensteuermoduls zweite NMOS-Transistoren sind.

12. UWB-Impuls-Emitter nach Anspruch 11, **dadurch gekennzeichnet, dass** das erste Formsteuersignal durch Integrieren eines ersten Stroms in eine RC1-Schaltung erzeugt wird, wobei C1 die Summe der Gatter-Quelle-Kapazitäten der PMOS-Transistoren des ersten Hüllkurvensteuermoduls ist, und dass das zweite Formsteuersignal durch Integrieren eines zweiten Stroms in eine RC2-Schaltung erzeugt wird, wobei C2 die Summe der Gatter-Quelle-Kapazitäten der NMOS-Transistoren des zweiten Hüllkurvensteuermoduls ist.

13. UWB-Impuls-Emitter nach einem der vorstehenden Ansprüche, **dadurch gekennzeichnet, dass** er umfasst:

Eine Vielzahl von parallel geschalteten H-Brücken, wobei die ersten Mittelpunkte der ersten Zweige dieser Brücken über eine Vielzahl von ersten Brückenentkopplungskapazitäten mit einem ersten gemeinsamen Anschluss verbunden sind, wobei die zweiten Mittelpunkte der zweiten Zweige dieser Brücken über eine Vielzahl von zweiten Brückenentkopplungskapazitäten mit einem zweiten gemeinsamen Anschluss verbunden sind, wobei die UWB-Antenne mit dem ersten und/oder dem zweiten gemeinsamen Anschluss verbunden ist; und, für jede der H-Brücken:

Ein erstes Amplitudensteuermodul zwischen einem Versorgungsanschluss und dem ersten gemeinsamen Ende des ersten und des zweiten Zweiges der Brücke, mit dem die hohe Spannung an diesem ersten gemeinsamen Ende variiert werden kann, und/oder
ein zweites Amplitudensteuermodul zwischen dem zweiten gemeinsamen Ende des ersten und des zweiten Zweiges der Brücke und der Masse, mit dem die niedrige Spannung am zweiten gemeinsamen Ende variiert werden kann;
ein erstes Hüllkurvensteuermodul zwischen den ersten Schaltern der Brücke und den Mittelpunkten des ersten und des zweiten Zweiges dieser Brücke, das dazu bestimmt ist, die Hüllkurve des positiven Teils des von dieser Brücke erzeugten UWB-Impulses mittels eines ersten Basisbandsignals, das dieser Brücke zugeordnet ist, zu formen;
ein zweites Hüllkurvensteuermodul zwischen den Mittelpunkten der ersten und des zweiten Zweiges der Brücke und den zweiten Schaltern dieser Brücke, das dazu bestimmt ist, die Hüllkurve des negativen Teils des von dieser Brücke erzeugten UWB-Impulses mittels eines zweiten Basisbandsignals, das dieser Brücke zugeordnet ist, zu formen,
wobei die ersten Basisbandsignale der verschiedenen Brücken voneinander unabhängig sind und die zweiten Basisbandsignale der verschiedenen Brücken ebenfalls voneinander unabhängig sind.

14. UWB-Impuls-Emitter nach Anspruch 13, **dadurch gekennzeichnet, dass** das erste Amplitudensteuermodul und das zweite Amplitudensteuermodul allen der H-Brücken gemein sind.

15. UWB-Impuls-Emitter nach Anspruch 13 oder 14, **dadurch gekennzeichnet, dass** die ersten und die zweiten Schalter der ersten Zweige der verschiedenen Brücken mittels eines ersten HF-Schaltsignals geschaltet werden, und dass die ersten und die zweiten Schalter der zweiten Zweige der verschiedenen Brücken mittels eines zweiten HF-Schaltsignals geschaltet werden, das zum ersten HF-Schaltsignal invers ist.

**Claims**

1. A UWB pulse emitter comprising at least one H-bridge, said bridge having a first branch (310b) and a second branch (320b) in parallel, a first end common to the first and second branches being connected to a high voltage and a second end common to the first and second branches being connected to a low voltage, the first branch comprising a first midpoint (315) and the second branch comprising a second midpoint (325), a UWB antenna (350) being connected to the first midpoint and/or to the second midpoint, the first branch (310b) comprising a first switch (313) between said first common end and the first midpoint as well as a second switch (317) between the first midpoint and the second common end , the second branch (320b) comprising a first switch (323) between said first common end and the second midpoint as well as a second switch (327) between the second midpoint and the second common end, the first and second switches of a branch being in opposite switching states and the switching state of the first (resp. second) switch of the first branch being opposite to the switching state of the first (resp. second) switch of the second branch, each switch being switched at the same RF frequency giving the central frequency of the UWB pulses, the UWB pulse emitter comprising:

- a first amplitude control module (330) between a power supply terminal and the first common end, allowing varying said high voltage at the first common end, and/or
- a second amplitude control module (370) between the second common end and the ground, allowing varying said low voltage at the second common end;
- a first envelope control module (340) between the first switches (313, 323) and the midpoints (315, 325) of the two branches, intended to shape the envelope of the positive part of a UWB pulse by means of a first baseband signal;
- a second envelope control module (360) between the midpoints (315, 325) and the second switches (317, 327) of the two branches, intended to shape the envelope of the negative part of a UWB pulse by means of a second baseband signal.

2. The UWB pulse emitter according to claim 1, **characterised in that** the UWB antenna is connected between the first midpoint and the second midpoint.

3. The UWB pulse emitter according to claim 1, **characterised in that** the UWB antenna is connected to the first midpoint via a first decoupling capacitor, and the second midpoint is connected to the ground via a second decoupling capacitor in series with a characteristic impedance.

4. The UWB pulse emitter according to one of the preceding claims, **characterised in that** the first switches are PMOS transistors and the second switches are NMOS transistors, the first and second switches of the first branch being controlled by a first control signal and the first and second switches of the second branch being controlled by a second control signal, the inverse of the first control signal.

5. The UWB pulse emitter according to one of the preceding claims 1-3, **characterised in that** the first branch includes two first switches in parallel (513-1,513-2) between said first common end and the first midpoint, as well as two second switches in parallel (517-1,517-2) between the first midpoint and the second common end, and that the second branch also includes two first switches in parallel (523-1,523-2) between said first common end and the second midpoint, as well as two second switches in parallel (527-1,527-2) between the second midpoint and the second common end, the respective switching signals of the first switches of the first and second branches as well as respective switching signals of the second switches of the first and second branches being supplied by a multiplexer receiving as input clock signals at the frequency RF, respectively in phase, in phase quadrature, in phase opposition and in opposition phase quadrature, said multiplexer being controlled by the components (I,Q) of a QPSK or 8-PSK symbol to be transmitted.

6. The UWB pulse emitter according to one of the preceding claims, **characterised in that**:

   - the first amplitude control module (630) comprises a PMOS transistor (631) whose source is connected to the power supply voltage and whose drain is connected to the first common end, said PMOS transistor being controlled by a high reference voltage, obtained as the voltage at an intermediate node of a first resistor ladder (635); and/or that
   - the second amplitude control module (670) comprises an NMOS transistor (671) whose source is connected to the second common end and whose drain is connected to ground, said NMOS transistor being controlled by a low reference voltage, obtained as the voltage at an intermediate node of a second resistor ladder (675).

7. The UWB pulse emitter according to claim 6, **characterised in that** the first resistor ladder is connected between two consecutive first intermediate nodes of a coarse resistor ladder (680), itself connected between the power supply voltage and the ground, these two consecutive first intermediate nodes being selected by means of a first multiplexer (636), and that the second resistor ladder is connected between two consecutive second intermediate nodes of said coarse resistor ladder, these two consecutive second intermediate nodes being selected by means of a second multiplexer (676).

8. The UWB pulse emitter according to one of claims 1 to 5, **characterised in that**:

   - the first amplitude control module comprises a plurality of first transmission gates (731-0, 731-1, ..., 731-N) mounted in parallel, whose inputs are connected to the power supply voltage and whose outputs are connected to the first common end, the plurality of first transmission gates being individually controlled by a plurality of first selection signals (Sel-TgP <0>, ..., Sel-TGP <N>); and/or that
   - the second amplitude control module comprises a plurality of second transmission gates (771-0, 771-1, ..., 771-N) mounted in parallel, whose inputs are connected to the second common end and whose outputs are connected to ground, the plurality of second transmission gates being individually controlled by a plurality of second selection signals (Sel-TgN <0>, ..., Sel-TGN <N>).

9. The UWB pulse emitter according to one of claims 1 to 5, **characterised in that** the first amplitude control module

18

comprises a first LDO voltage regulator and/or the second amplitude control module comprises a second LDO voltage regulator.

10. The UWB pulse emitter according to one of the preceding claims, **characterised in that**:

- the first envelope control module comprises a first switch (441) in the first branch as well as a first switch in the second branch (442), said first switches of the first envelope control module being controlled by means of a first shape control signal (ClkBB0-);
- the second envelope control module comprises a second switch (461) in the first branch as well as a second switch in the second branch (462), said second switches of the second control module being controlled by means of a second shape control signal (ClkBB0+).

11. The UWB pulse emitter according to claim 10, **characterised in that** the first switches of the first envelope control module are PMOS transistors and the second switches of the second envelope control module are second NMOS transistors.

12. The UWB pulse emitter according to claim 11, **characterised in that** the first shape control signal is generated by integrating a first current in a RC1 circuit where C1 is the sum of the gate-source capacitances of the PMOS transistors of the first envelope control module and that the second shape control signal is generated by integrating a second current in a RC2 circuit where C2 is the sum of the gate-source capacitances of the NMOS transistors of the second envelope control module.

13. The UWB pulse emitter according to any one of the preceding claims, **characterised in that** it comprises:

a plurality of H-bridges mounted in parallel, the first midpoints of the first branches of these bridges being connected to a first common terminal through a plurality of first bridge decoupling capacitors, the second midpoints of the second branches of these bridges being connected to a second common terminal through a plurality of second bridge decoupling capacitors, the UWB antenna being connected to the first and/or second common terminal;
and, for each of the H-bridges:

a first amplitude control module between a supply terminal and the first end common to the first and second branches of said bridge, allowing varying the high voltage at this first common end, and/or
a second amplitude control module between the second end common to the first and second branches of said bridge and the ground, allowing varying the low voltage at the second common end;
a first envelope control module between the first switches of said bridge and the midpoints of the first and second branches of this bridge, intended to shape the envelope of the positive part of the UWB pulse generated by this bridge, by means of a first baseband signal associated with this bridge;
a second envelope control module between the midpoints of the first and second branches of said bridge and the second switches of this bridge, intended to shape the envelope of the negative part of the UWB pulse generated by this bridge by means of a second baseband signal associated with this bridge,
the first baseband signals of the different bridges being independent of each other and the second baseband signals of the different bridges also being independent of each other.

14. The UWB pulse emitter according to claim 13, **characterised in that** the first amplitude control module and the second amplitude control module are common to all of the H-bridges.

15. The UWB pulse emitter according to claim 13 or 14, **characterised in that** the first and second switches of the first branches of the different bridges are switched by means of a first RF switching signal and that the first and second switches of the second branches of the different bridges are switched by means of a second RF switching signal, inverse of the first RF switching signal.

**Fig. 1**

**Fig. 2**

VDD
330
Pulse Amplitude Control
323 313
ClkRF+ ClkRF-
340
Pulse Shaping Control
ClkBB+
350
325 310b
315 320b 360
ClkBB-
Pulse Shaping Control
ClkRF+ ClkRF-
317 327
Pulse Amplitude Control
GND 370

<u>Fig. 3</u>

**Fig. 4A**

**Fig. 4B**

**Fig. 4C**

**Fig. 5**

VDD

631

630

Vref+

623 ClkRF+

613 ClkRF-

100Ω
Antenna

640 Pulse Shaping Control

660 Pulse Shaping Control

ClkRF+

ClkRF-

617

627

671

Vref-

670

GND

680

Common Coarse
Resistor Ladder

VDD

GND

635

Multiplexor + Fine Resistor
Ladder for vref+

Velrefh+<n>

Velrefh+<n>

636

637

675

Multiplexor + Fine Resistor
Ladder for vref-

Velrefh-<n+1>

Velrefh-<n>

676

677

**Fig. 6**

**Fig. 7**

**Fig. 8**

**Fig. 9**

**Fig. 10A**

**Fig. 10B**

**Fig. 10C**

**RÉFÉRENCES CITÉES DANS LA DESCRIPTION**

**Documents brevets cités dans la description**

- US 8179945 B

- US 20120027050 A

**Littérature non-brevet citée dans la description**

- **C. KIM et al.** Design of a tunable all-digital UWB pulse generator CMOS chip for wireless endoscope. *IEEE Trans. on Biomédical Circuits and Systems,* Février 2010, vol. 4 (2), 118-124

- A 15 pJ/pulse all-digital UWB pulse generator with pulse tuning capability. *Proceedings of 51st MidWest Symposium on Circuits And Systems, MWSCAS 2008,* 10 Août 2008, 578-581